Europäisches Patentamt

European Patent Office

Office européen des brevets

(19)

(11) **EP 0 787 311 B1**

(12) **EUROPEAN PATENT SPECIFICATION**

(45) Date of publication and mention
of the grant of the patent:
**12.05.1999  Bulletin 1999/19**

(21) Application number: **95932534.1**

(22) Date of filing: **18.09.1995**

(51) Int Cl.6: **G02B 5/124**

(86) International application number:
**PCT/US95/11793**

(87) International publication number:
**WO 96/10197 (04.04.1996 Gazette 1996/15)**

(54) **RETROREFLECTIVE TILTED PRISM STRUCTURE**

RETROREFLEKTIVE GENEIGTE PRISMENSTRUKTUR

STRUCTURE DE PRISME INCLINE RETROREFLECHISSANTE

(84) Designated Contracting States:
**DE FR GB**

(30) Priority: **28.09.1994  US 314487**
**28.09.1994  US 314462**

(43) Date of publication of application:
**06.08.1997  Bulletin 1997/32**

(73) Proprietor: **Reflexite Corporation**
**Avon, CT 06001-4217 (US)**

(72) Inventor: **NILSEN, Robert, B.**
**Weatoque, CT 06089 (US)**

(74) Representative: **Greenwood, John David et al**
**Graham Watt & Co.**
**Riverhead**
**Sevenoaks Kent TN13 2BN (GB)**

(56) References cited:
**EP-A- 0 137 736**        **EP-A- 0 390 344**
**FR-A- 2 662 819**        **US-A- 3 689 346**
**US-A- 3 712 706**        **US-A- 4 244 683**

**Description**

Background of the Invention

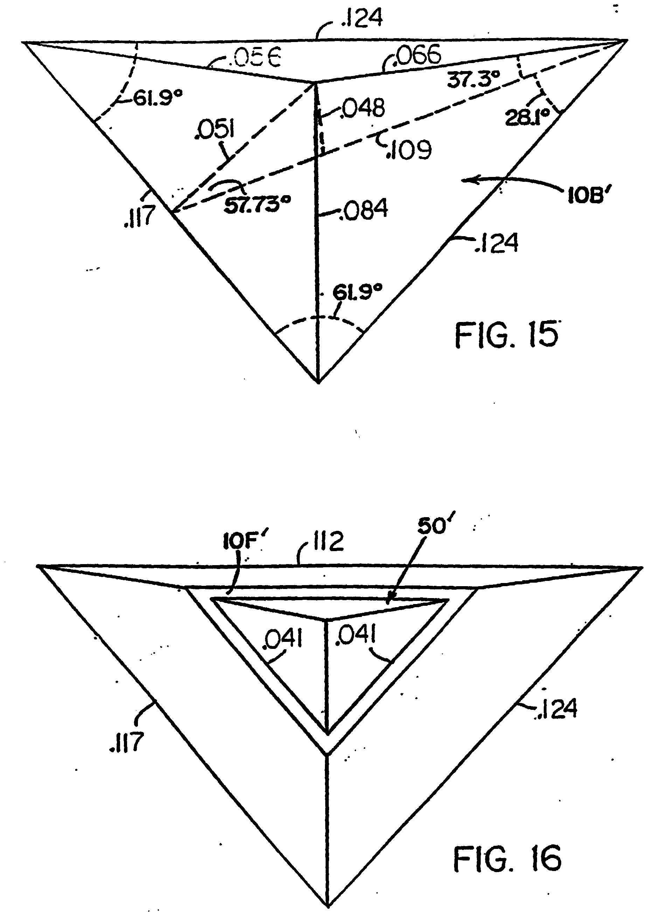

Retroreflective structures of the type utilized herein are described in detail in the Jungersen patent U.S. 2,380,447, issued July 31, 1945, the Hoopman patent U.S. 4,588,258, issued May 13, 1986 and the Stamm patent U.S. 3,712,706, issued January 23, 1973 (each of which is incorporated herein in its entirety by reference.) In particular FIG. 15 of the Jungersen patent illustrates in plan view a sheet of reflective prisms which reflect light at an angle other than perpendicular to the reflector. The Hoopman patent discloses cube-corner retroreflective articles in which the optical axis of the elements in an array of prism element pairs are tilted toward one edge of the elements, when considered from the front surface of the article on which light to be retroreflected images. This tilt direction is herein defined as "positive" type tilt; as contrasted to the tilt direction shown in FIG. 15 of the Jungersen patent in which the optical axis of prism pairs tilts away from the common edge.

In the course of prosecuting an EPO Patent Publication No. 0137736B1 (corresponding to the Hoopman U.S. Patent above-referenced) it was alleged that the direction of tilt in Jungersen (negative) from one perspective might seem more effective to increase the capability of cube-corner elements to reflect light through an increased range of incident angles and more specifically "to open the way to receiving into the cube corner, and thus reflecting larger amounts of light, especially in the X-X plane" of the retroreflective sheeting.

It was further alleged that the tilt direction (positive) of the Hoopman patent increases "angularity" in both the X-X plane (horizontal) and Y-Y plane (vertical) and that this was an unexpected but desirable result especially for use in traffic control signs.

Walter, U.S. Patent No. 5,171,624 (also incorporated herein in its entirety by reference) discloses microprism reflective sheeting in which prism pairs are tilted with respect to one another at an angle of 3-10°, prism size of 0.15-0.64 mm (0.006-0.025 inches) (apace between apices) and wherein at least one prism side surface is arcuate.

Benson U.S. Patent No. 5,122,902 discloses retroreflective cube-corner elements with separation surfaces between elements and truncated cube-corner elements.

Summary of the Invention

Contrary to the foregoing teachings in the prior art in an embodiment of the invention, cube corner retroreflective articles having wide observation angle performance, uniform orientation angle performance and wide angularity in multiple viewing planes, superior whiteness properties and truer color are provided by an array of retroreflective prism elements wherein pairs of such elements are tilted in a negative direction with respect to one another and wherein windows are formed in one of the prisms of some of the prism pairs adjacent the intersection between prism pairs. The prism elements are corner cubes formed of three lateral mutually perpendicular planar faces defined at their bases by linear edges which do not necessarily lie in a common plane.

The windows are formed by casting the elements on a mold in which a section of the prism element mold is removed.

Removing a section of one of the prism mold elements creates a smaller prism element which produces increased observation angle performance. Good observation angle performance is especially important for retroreflecting objects viewed by trucks or airplanes where the source of light is spaced a further distance from the driver than an automobile. Such improved performance is also important for automobile drivers when the driver is very close to the retroreflecting object.

Brief Description of the Drawings

FIG. 1 is a plan view of a portion of the retroreflective sheeting of the invention.
FIG. 2 is a side-view of a portion of the top surface of the sheeting of FIG. 1 taken along lines I-I.
FIG. 3 is a side-view of a portion of the top surface of the sheeting of FIG. 1 taken along lines II-II.
FIG. 4 is a aide-view of a portion of the top surface of the sheeting of FIG. 1 taken along lines III-III.
FIG. 5 is an enlarged side view of a master mold for an array of prisms illustrating how the small prisms 10C and faces 10F of FIG. 1 are formed.
FIG. 6 is an enlarged plan view of a single pair 10C/10B of prism elements of the invention.
FIG. 7 is a side-view of the prism elements of FIG. 6 taken along lines VI-VI.
FIG. 8 is a plan view of an alternate embodiment.
FIG. 9 is a side view of FIG. 8 taken along lines VIII-VIII.
FIG. 10 is a plan view of a further embodiment of the sheeting of the invention.
FIG. 11A is a plot of the intensity of light reflected from 0.14 mm (0.0055 inch) prism size, 3° negative tilt prism, with air backed reflector sheeting formed with no windows taken at an observation angle of 0.33°.

FIG. 11B is a plot as in FIG. 11A taken at the same observation angle with metallized sheeting.

FIG. 11C is a plot as in FIG. 11A with the addition of windows in accordance with the present invention.

FIG. 11D is a plot as in FIG. 11B with the addition of windows in accordance with the embodiment depicted in FIG. 1 of the present invention.

FIG. 12A is a plot as in FIG. 11A for relatively small 0.1 mm (0.004 inch) size prisms with 3° negative tilt and no windows at 0.50° observation angle.

FIG. 12B is a plot as in FIG. 12A at the same observation angle with metallization.

FIG. 12C is a plot as in FIG. 12A with windows.

FIG. 12D is a plot as in FIG. 12B with windows and metallization in accordance with the prism embodiment of FIG. 16.

FIG. 13 is a dimensional perspective view of a prism 10B formed in accordance with the invention.

FIG. 14 is a dimensional view of the prism of FIG. 13 modified in accordance with the invention to form a 0.1 mm (0.0041 inch) smaller prism 50 with flats 10F on all three sides thereof.

FIG. 15 is a dimensional perspective of another prism embodiment.

FIG. 16 illustrates the prism 10B' of FIG. 15 modified to form a 0.04 mm (0.0016 inch) size prism 50' with flats 10F' on all sides.

FIG. 17 is a plan view of a prior art retroreflective prism mold.

FIG. 18 is a plan view of a portion of the mold of FIG. 30 as modified in accordance with the invention.

FIG. 19 is a schematic side view illustrating the different groove lines or cuts that can be taken in the second pass to make the modification shown in FIG. 18.

Detailed Description of the Invention

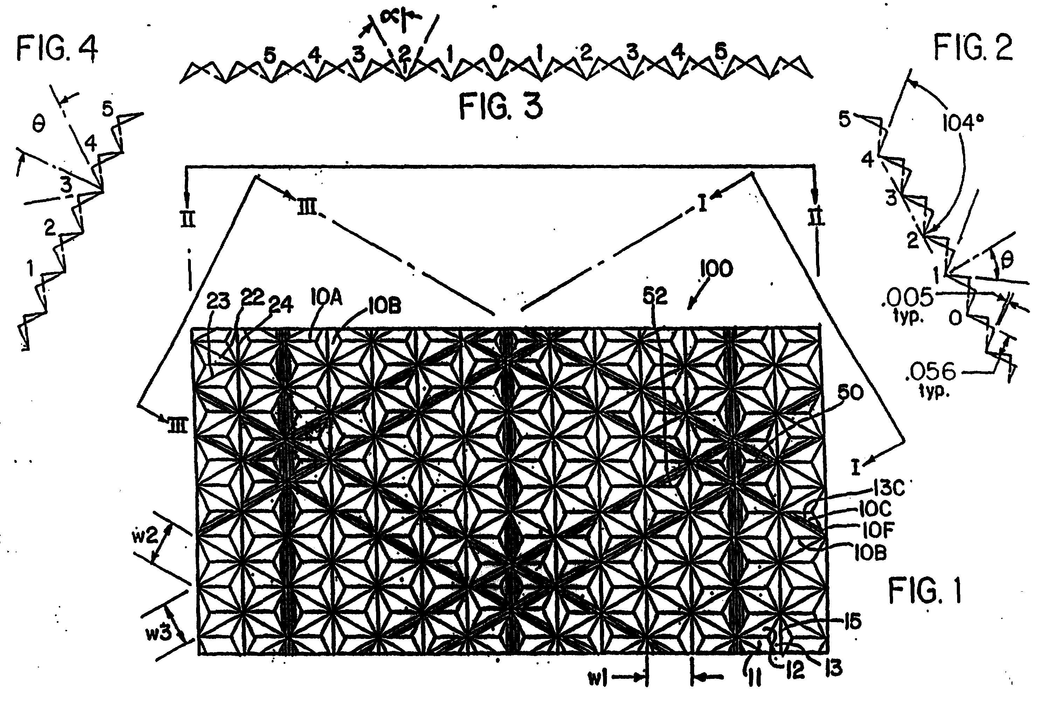

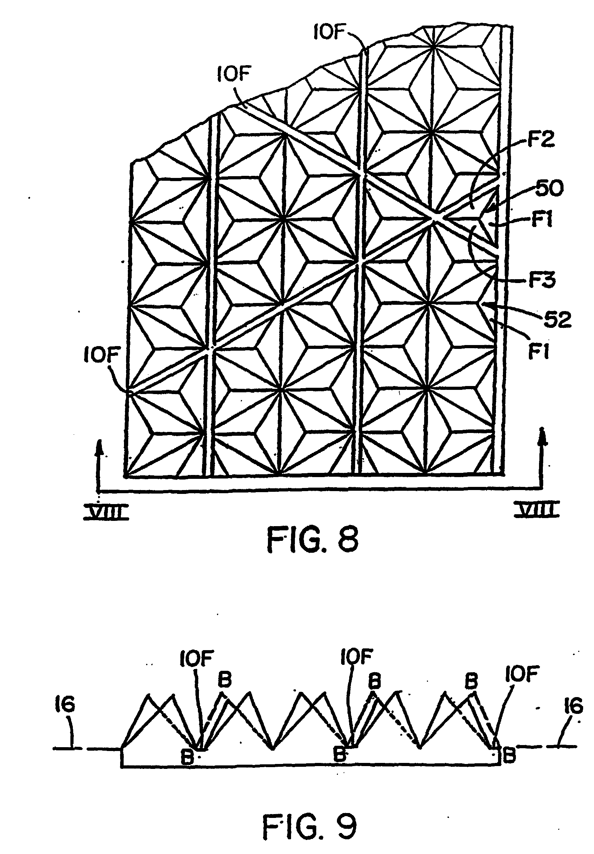

Referring now to FIGS. 1-7, an ultra thin flexible sheeting 100 of the invention is shown. The term "sheeting" as used herein refers to relatively thin sheet-like structures as well as thicker members, laminates and the like, which have a substantially planar front face upon which light rays impinge and which have a body portion which is essentially transparent to the light rays. The article 100 is comprised of a dense array of micro sized cube corner elements 10 arranged in pairs 10A, 10B with the optical axes 17 (the trisector of a internal angle defined by the prism faces 11, 12, 13) of the elements tilted away from one another (negative tilt). The angle of tilt $\beta$ (FIG. 7) is preferably more than 1.0 degree and less than 7.0 degrees with respect to a perpendicular 19 extending from the near common plane in which the base edges of the cube corner approximate. The size of the cube corner elements 10A and 10B, in both height (h) and width (W) along with the direction of tilt, is a critical parameter for obtaining the maximum level of wide observation angle performance without sacrificing the narrow observation angle performance required for long distance retroreflective performance of the articles. Preferably the cube corner base width W1, W2, or W3 of the base is formed on a common plane in which the base edges of the cube corner faces 11, 12 & 13 lie, and the width dimension is equal to or greater than 0.013 mm (0.0005 inches) and less than 0.15 mm (0.006 inches). Optimally W1-W3 are about 0.05 mm (0.002 inches).

The materials used to manufacture flexible articles 100 have indices of refraction which are preferably from 1.4 to 1.7. The thickness of the cube corner prism material is preferably a minimum of 0.0076 mm (0.0003 inches) thick and a maximum of 0.1 mm (0.004 inches) thick. The total thickness of the articles is determined by the protective and bonding layers (not shown) used to manufacture the finished article. The groove angles $\theta$ and $\alpha$ (FIGS. 2, 3 and 4) are preferably about 73.4° and 64.5° respectively.

The microprism sheeting 100 is conveniently formed by casting prisms upon a film surface functioning as the body, or by embossing a preformed sheeting, or by casting both body and prisms concurrently. Generally, the resins employed for such cast microprism sheeting are crosslinkable thermoplastic formulations, and desirably these resins provide flexibility, light stability, and good weathering characteristics. In some instances, the front face of the retroreflective sheeting may be provided with a protective coating, such as by application of a lacquer or other coating material. Other suitable resins for the retroreflective sheeting include vinyl chloride polymers, polyesters, polycarbonates, methyl methacrylate polymers, polyurethanes and acrylated urethanes.

To protect a relatively thin body member during processing, a relatively thick carrier may be temporarily bonded thereto, and it will generally have a thickness of 0.13-0.2 mm (0.005-0.008 inches). The adhesive used to effect the temporary bonding therebetween and which preferentially adheres to the carrier is conveniently a silicone adhesive applied to a thickness of about 0.0064-0.013 mm (0.00025-0.0005 inches). When ultraviolet curing of the resin in the prisms is employed, the adhesive must be transparent to the light rays. Although various resins may be employed for such a carrier, polyesters, and particularly polyethylene terephthalate, are desirably employed because of their toughness and relative resistance to processing conditions. As with the adhesive, the carrier should be transparent to the ultraviolet radiation used to effect curing. Moreover, the surface of the carrier may be treated to enhance the preferential adhesion of the adhesive to the surface of the carrier.

A particularly advantageous method for making such cast retroreflective sheeting is described and claimed in Rowland U.S. Patent 3,689,346 granted September 5, 1972 in which the cube corner formations are cast in a cooperatively configured mold providing microprism recesses and are bonded to sheeting which is applied thereover to provide a composite structure in which the cube corner formations project from the one surface of the sheeting.

Another method for fabricating such microprism sheeting is described in Rowland U.S. Patent 4,244,683 granted January 13, 1981 in which the cube corner formations are produced by embossing a length of sheeting in suitable embossing apparatus with molds having precisely formed microprism cavities and in a manner which effectively avoids entrapment of air.

The latter method has been used for forming sheeting of acrylic and polycarbonate resins which the former method has proven highly advantageous for forming retroreflective sheeting from polyvinyl chloride resins and, more recently, polyester body members with prisms of various resin formulations including acrylated epoxy oligomers.

It is customary to provide a backing sheet behind the microprisms so as to protect them and to provide a smooth surface for application of the structure to support surfaces. To effect lamination of such a backing sheet to the retroreflective sheeting, adhesives, RF welding and ultrasonic welding have generally been employed.

As previously described, the reflective interface for the prisms may be provided by a reflective coating or by an air interface. In the preferred embodiment of the present invention, a reflective coating is provided upon the surfaces of at least some of the microprisms. Such reflective coatings have most commonly been vacuum metallized aluminum or other specular metal deposits, although metallic lacquers and other specular coating materials have also been used.

A colored coating material (not shown) may also be provided over some of the prisms to provide a daytime coloration. Such a material may be a colored lacquer applied to the surface of the sheeting, a colored adhesive, or any other colored deposit which will coat the prism surfaces. Conveniently, a colored adhesive is employed since this will enable bonding of the backing material thereto.

A retroreflective material utilizing some prisms which have reflective air interfaces and others which utilize a reflective coating offers some advantages and is described in detail in Martin U.S. Patent 4,801,193 granted January 31, 1989. If so desired, retroreflective sheeting may be produced by applying the backing material to partially metallized materials so as to maintain the air interface in the uncoated areas.

To produce a sheeting which exhibits a daytime coloration, a colored coating may be applied over the entire area of a partially metallized surface so that it directly coats the unmetallized prisms. Thereafter, the backing material is applied. In an alternate colored embodiment using an air interface for retroreflection, a colored adhesive is applied in a pattern to the prism surface and to a depth greater than the height of the prisms. When the backing element is laminated thereto, it is spaced from the prisms by the adhesive and this provides an air interface about the uncoated prisms.

The backing material may be any suitable material. For flexibility, it is a woven or laid fabric, or a flexible, durable polymeric material. Suitable resins include polyethylene, polypropylene, polyurethanes, acrylated polyurethanes and ethylene/vinyl acetate copolymers. Polyester and urethane fabrics may be employed as well as those of natural fibers such as cotton. Flame retardants may be incorporated in the adhesives as well as in the fabric or resin backing to impart flame retardance to the retroreflective material.

Although other metals may be used to provide a specular metal deposit including silver, rhodium, copper, tin, zinc, and palladium, the preferred and most economical processes utilize aluminum vacuum deposition. Other deposition techniques include electroless plating, electroplating, ion deposition and sputter coating.

The step of adhering the backing to the retroreflective sheeting may simply involve applying an adhesive to the sheeting and passing the adhesively coated retroreflective sheeting through the nip of a pair of rolls together with the backing material to apply the necessary pressure to effect adhesion. If a heat activatable adhesive is employed, the retroreflective sheeting may be subjected to preheating prior to passage through the rolls, or the rolls may be heated to achieve the necessary activation. However, it is also practicable to employ ultrasonic welding and other techniques to bond the backing material to the retroreflective sheeting by the material of the backing material itself when it is thermoplastic.

To provide a coloration to the retroreflective light at night, a dye may be incorporated in the resin used to form the body member, and even the prisms. As an alternative to a dye and as an effective necessity in some resin systems, the colorations may be provided as a finely divided pigment which is well dispersed; however, some loss in retroreflectivity will occur as the result of refraction by pigment particles which are directly in the path of light rays.

A glossary of the terms used in the above referenced polar plots and Tables which follow is enclosed for the convenience of the reader.

GLOSSARY

*observation angle,* angle between the illumination axis and the observation axis.

*retroreflection axis,* a designated line segment from the retroreflector center that is used to describe the angular position of the retroreflector.

*rotation or orientation angle,* angle indicating orientation after rotation about the retroreflector axis.

*entrance angle,* this angle denotes the inclination of the object.

Referring now to FIGS. 1-7, an ultra thin flexible sheeting 100 of the invention is shown. The article 100 is generally comprised of a dense array of micro sized cube corner elements 10 arranged in pairs 10A, 10B. The optical axes 17 of the elements are tilted away from one another (negative tilt). The angle of tilt β (FIG. 7) is preferably more than 1.0 degree and less than about 7.0 degrees with respect to a perpendicular 19 extending from the near common plane 16 in which the base edges of the cube corner approximate. Preferably the cube corner base width W1, W2, or W3 of the base is formed on a common plane in which the base edges of the cube corner faces 11, 12 & 13 lie, and the width or size dimension is greater than 0.013 mm (0.0005 inches) and preferably less than 0.15 mm (0.006 inches) but may extend beyond 0.15 mm (0.006 inches) to about 0.635 mm (0.025 inches). Optimally W1-W3 are about 0.1 mm (0.004 inches).

The materials used to manufacture flexible articles 100 have indices of refraction which are preferably from 1.4 to 1.7. The thickness of the cube corner prism material is preferably a minimum of 0.005 mm (0.0002 inches) thick and a maximum of 0.1 mm (0.004 inches) thick. The total thickness of the articles is determined by the protective and bonding layers (shown in the referenced copending application) used to manufacture the finished article. The groove angles θ and α (FIGS. 2, 3 and 4) are preferably about 64.5° and 73.4° respectively.

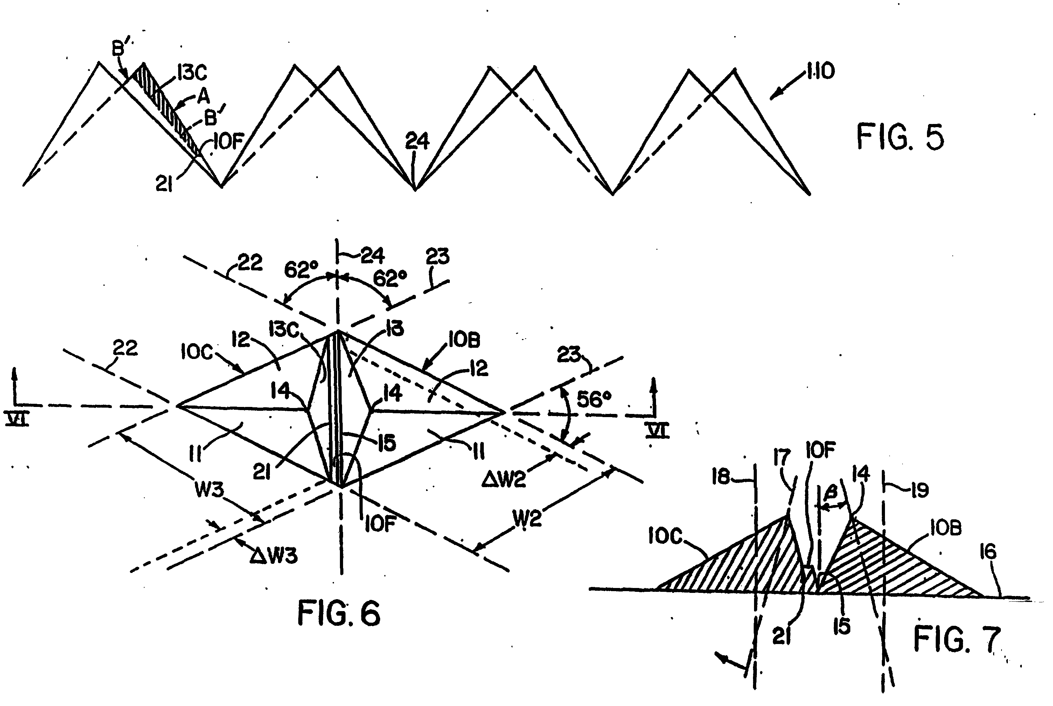

So far the description of article 100 is substantially as described above in the referenced preferred embodiment. The point of departure is shown in FIGS. 1 and 6 where it may be seen that certain of the prisms 10C in a pair have at least one face 13C which is foreshortened with respect to an opposing face 13 of a prism pair. This is accomplished, as shown in the side view (FIG. 5) of a mold 110 used to make the sheeting 100 of FIG. 1.

The mold structure 110 is created by first ruling or flycutting a master from suitable material, such as, brass or copper, in three directions spaced about 56° and 62°) from one another (with the above-referenced groove angles to achieve a 3° tilt) to form three sets of grooves 22,23, 24 as shown in the partial view of FIG. 5. Then, in a secondary ruling or flycutting operation a section A of every prism in a groove is removed along line B'-B' down to line 21 without changing the corner cubes on either side of the corner cube which is cut.

The area removed in the second pass creates a flat area 10F (See FIG. 6) and a smaller corner cube retroreflector 10C when the sheeting 100 is molded. Note that the cut that produces face 13C forms a corner cube structure 10C which has two faces (11 and 12) which are larger than face 13C. The corner cube structure 10C created with modified face 13C has an effective aperture that is slightly skewed because the line widths $W_3$ and $W_2$ are smaller by ∆W3 and ∆W2 than the original width of the prisms corner cubes, made in the first pass.

Also note that the window 10F which is created is not located in the base plane 16 of the corner cube 10C (See FIG. 7). That is, it is not bounded by the base edges of the lateral faces of the corner cube elements.

Also note that the flat area of face 10F is formed in a way which does not change the corner cube elements immediately adjacent. Corner cube 10B is left undisturbed by the process of forming area face 10F.

Another example of removing the area on one face of a row of prisms is shown in the plan view of FIG. 8 and side view of FIG. 9.

In this example, the windows 10F are formed in the base plane 16 and the corner cubes formed have one face F1 or three faces F1-F3 modified by the second cutting pass.

Corner cube 50 has all faces modified creating a smaller corner cube.

Corner cube 52 has only one face modified creating a corner cube which has a skewed effective aperture.

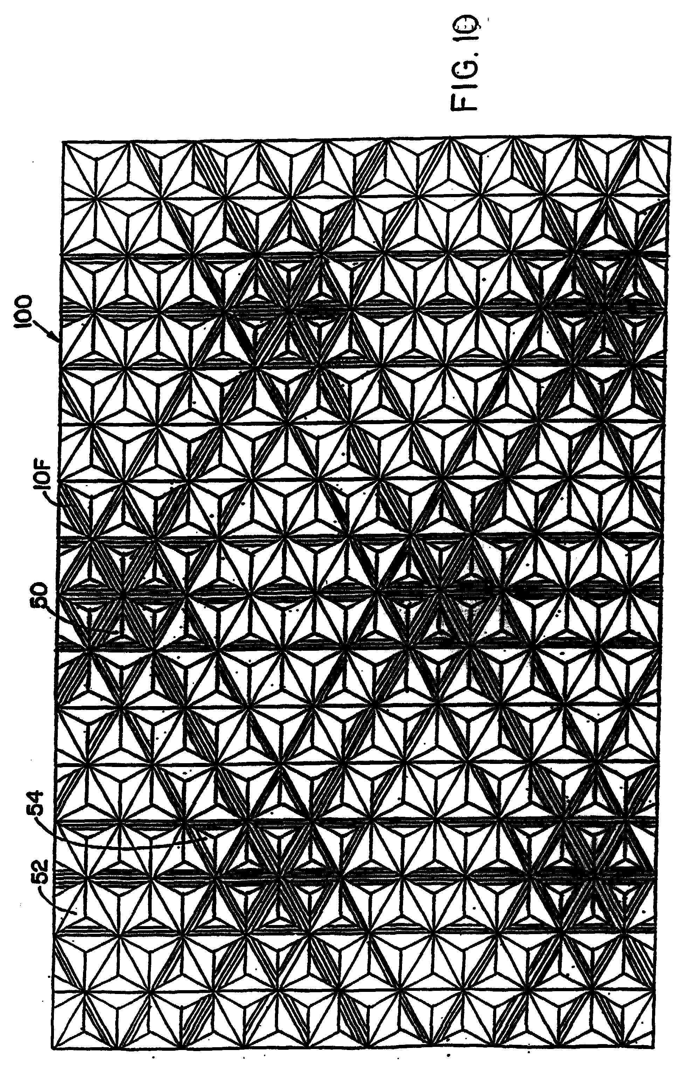

The second pass ruling or flycutting shown by dotted line B'-B' in FIG. 5 and B-B in FIG. 9 can be implemented or configured in many ways. Some examples are shown in FIGS. 1 and 10. The grooves which are modified determine the number of new full smaller corner cubes 50 created; the number of corner cubes with one face modified 52; with two faces modified 54; all faces modified 50 and the direction of the corner cubes face. In the example of FIG. 10:

| | |
|---|---|
| 8 out of 70 corner cubes are untouched | 11.4% |
| 40 out of 70 corner cubes, one face is changed | 57.1% |
| 10 out of 70 corner cubes, two faces are changed | 14.3% |
| 12 out of 70 corner cubes, three faces are changed | 17.2% |
| | 100.0% |

Depending on the spacing between the grooves that are modified, the retroreflecting area can be made to have any number of windows as desired and therefore can be adjusted to provide the desired back lighting (as described below). The area of the corner cubes that is removed in the second pass, as well as the size of the corner cubes created in the first pass, can be defined to optimize window size and the retroreflected light distribution produced by the different size corner cubes which are formed. The windows 10F also have the effect of allowing adjustment of the "cap Y" or whiteness values of non-metallized and metallized retroreflections.

Experimental Data

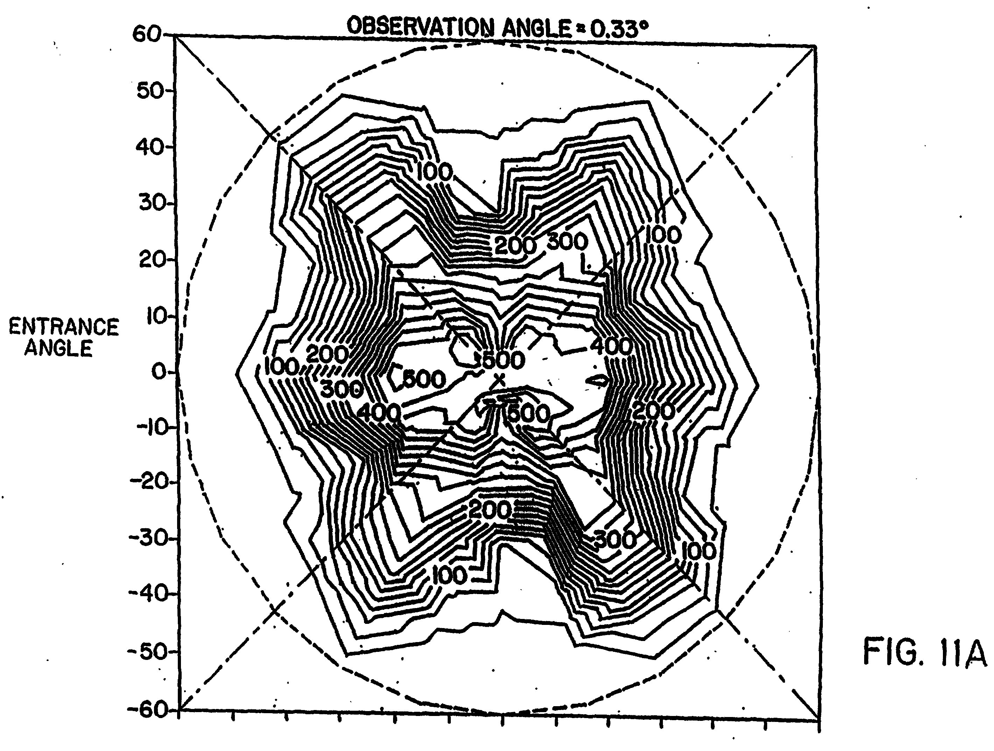

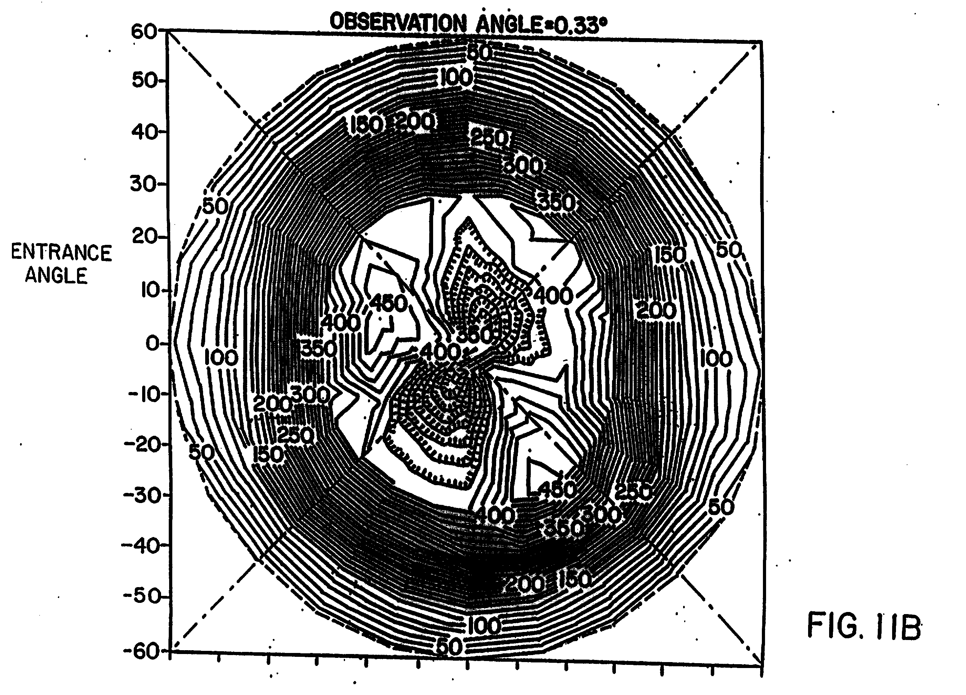

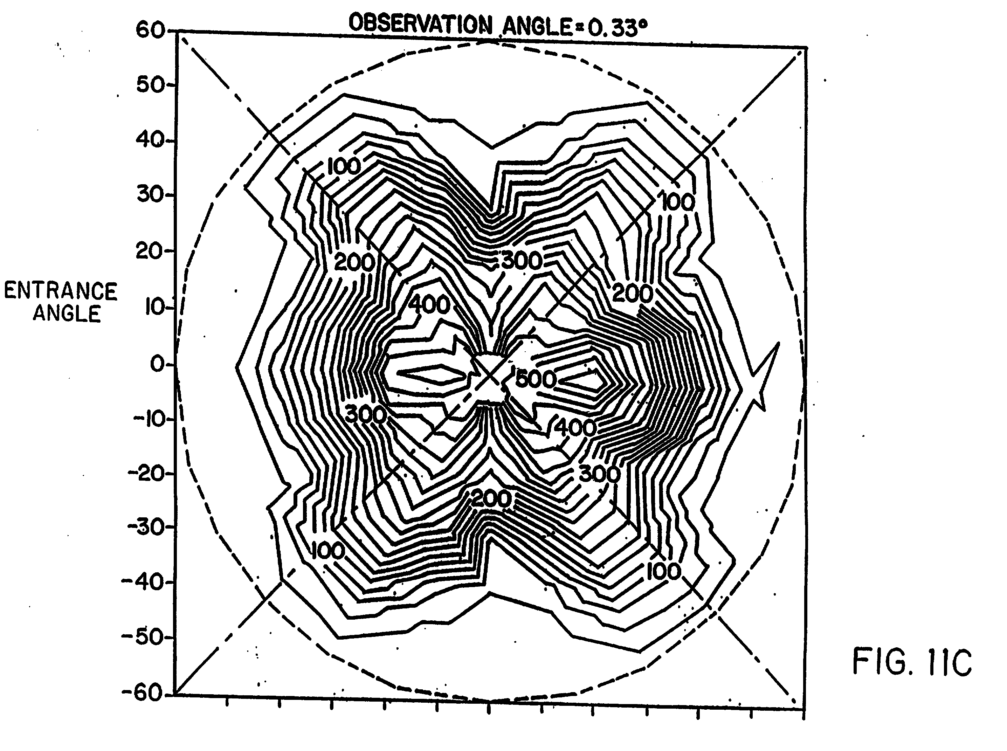

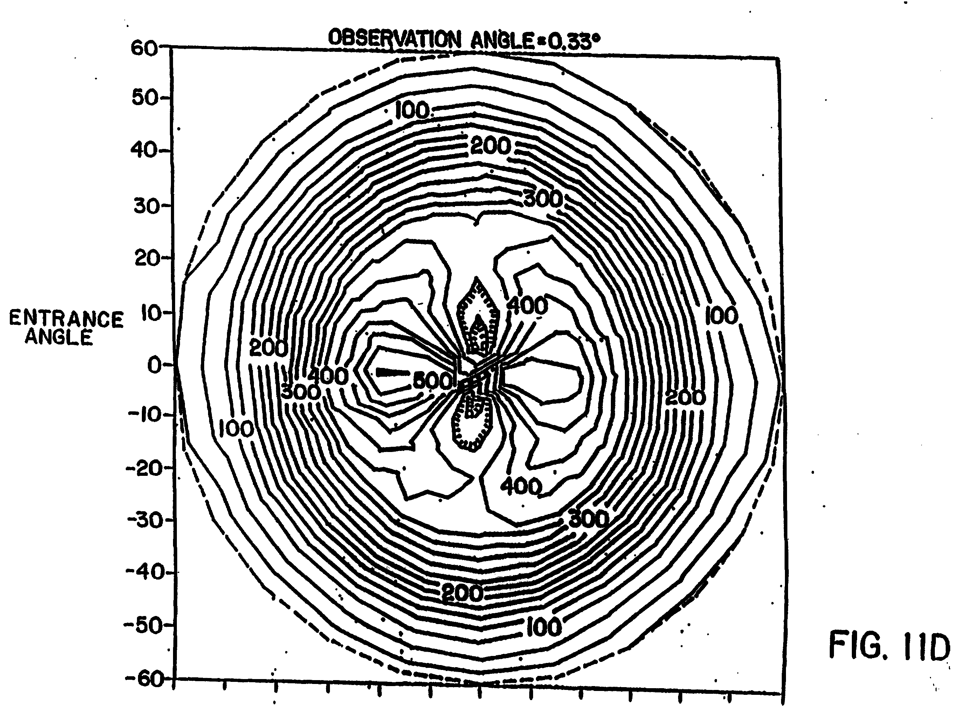

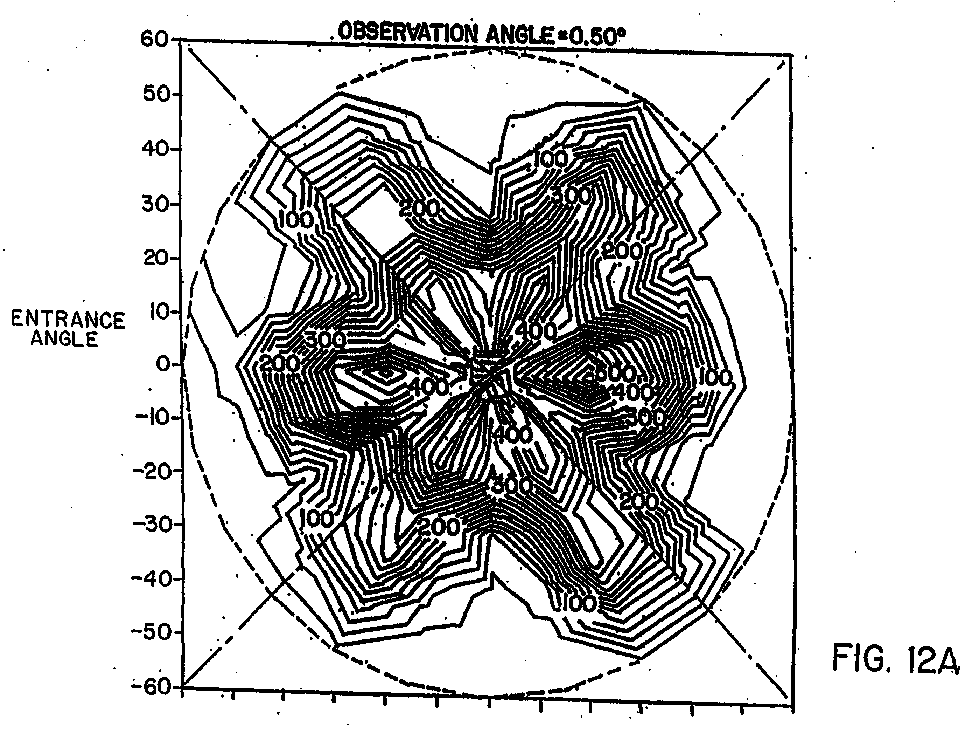

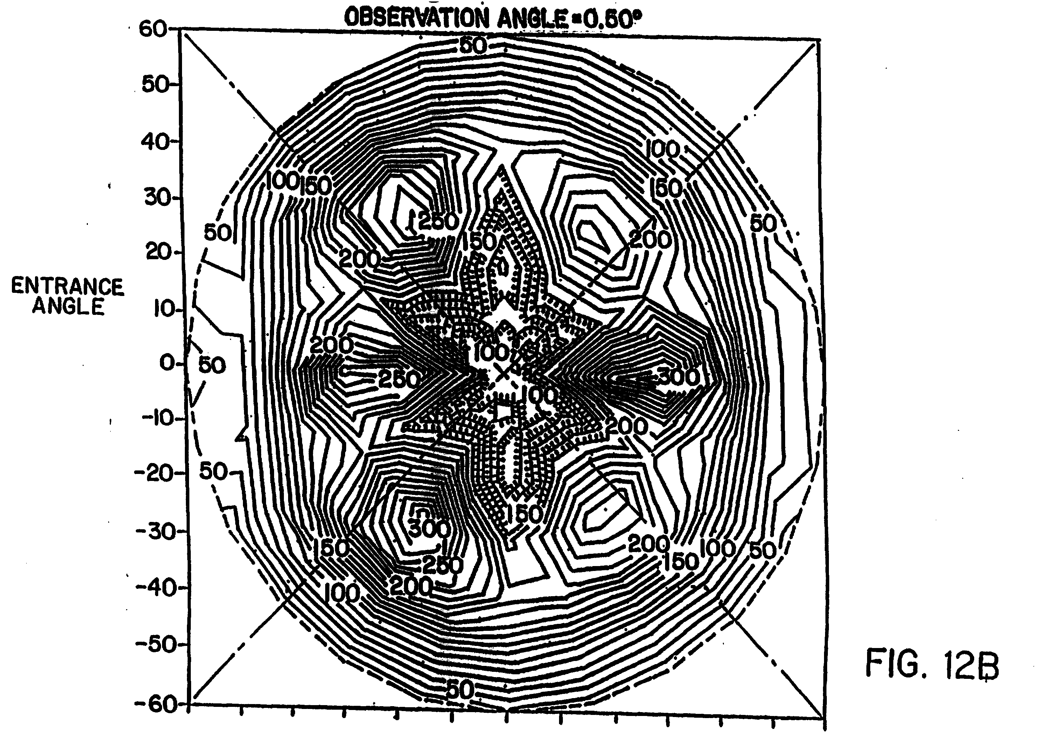

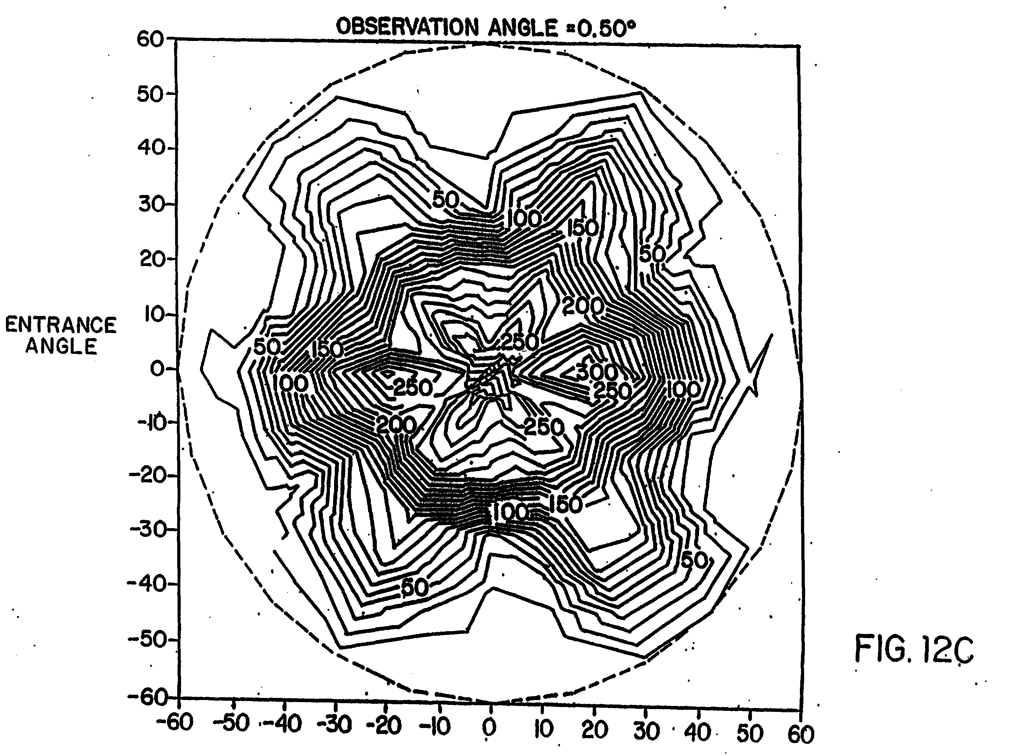

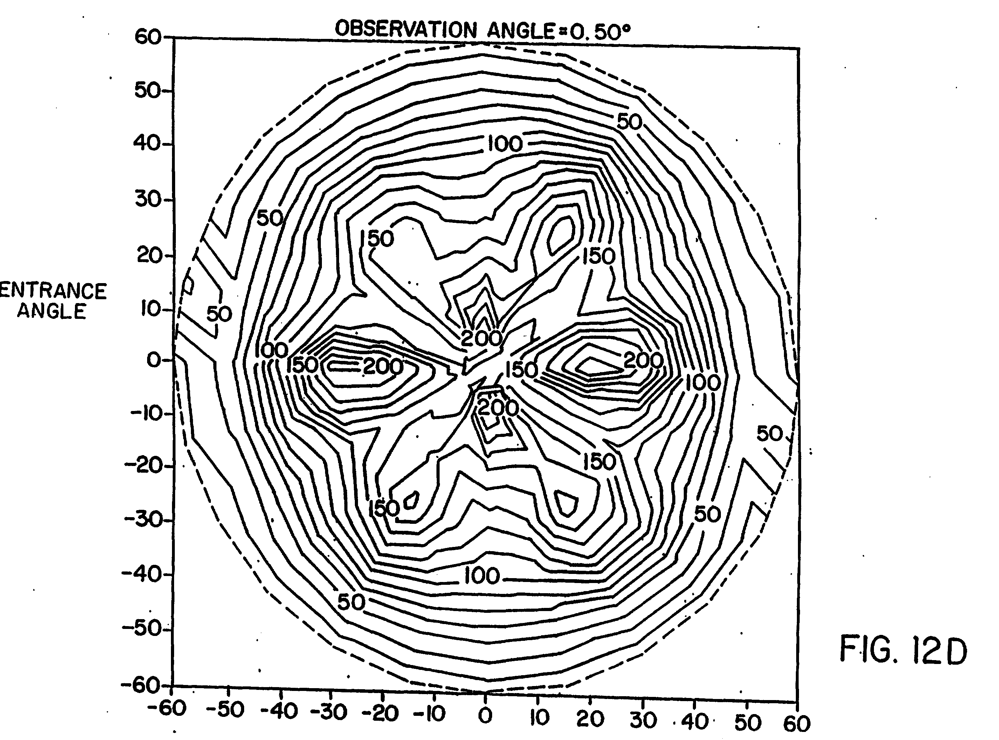

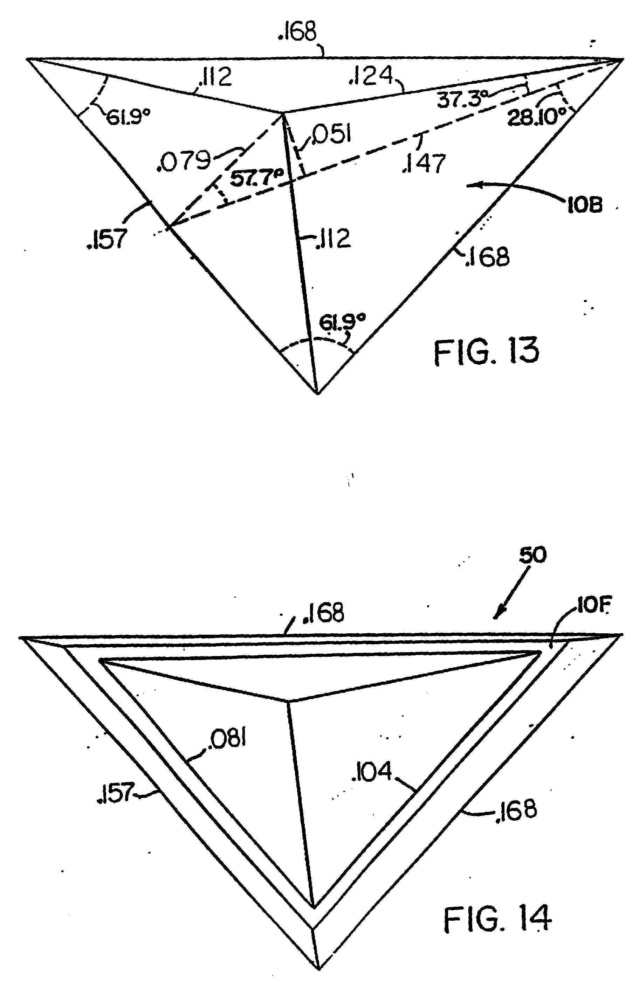

Polar plots of the light intensity, in cd/lux/m$^2$, plotted at various observation angles of retroreflectors made in accordance with the invention are shown in FIGS. 11A-D and FIGS. 12A-D. FIGS. 11A and 11B and 12A and 12B are plots for 0.14 mm (0.0055 inch) and 0.1 mm (0.004 inch) prisms, respectively, without windows at respective observation angles of 0.33° and 0.50°. FIGS. 11C and 11D and 12C and 12D are similar plots for 0.14 mm (0.0055 inch) and 0.1 mm (0.004 inch) prism size retroreflectors with windows. The improvement in the observation angle performance at a 0.33 degree observation angle is clearly seen by comparing FIG. 11B and FIG. 11D as the cube corner size is decreased by the addition of windows. FIG. 11D shows the improvement at 0.33° observation angle for the prism configuration of FIG. 14 and FIG. 12D shows the improvement at 0.50° degrees, obtained by the embodiment of FIG. 16. However, there is a minimum prism size, i.e., about 0.1 mm (0.004 inch) for the first cut and about 0.025 mm (0.001 inch) prism size created by the second cut which produces an optimum narrow and wide observation angle result.

The above articles produce excellent entrance angle performance as can be seen by the plots in FIGS. 11C, 11D, 12C and 12D.

Tables I and II, which follow, compare the brightness in cd/lux/m$^2$ of 0.14 mm (0.0055 inch) prisms with 3° negative tilt and metal backing. In Table I, no windows have been added. In Table II, the same tooling that was used to make the sheeting in Table I was used, but windows 10F were formed in accordance with the invention shown in FIGS. 10 and 14. The plus signs opposite certain data in Table II show where an increase in brightness occurred over the sample in Table I as a result of the smaller 0.036 to 0.041 mm (0.0014 to 0.0016 inch) prisms created when the windows were formed. Tables III and V show even better results for 0.1 mm (0.004 inch) size prisms of FIG. 16 formed in a first cut.

Orientation Angle

| Observation Angle | Entrance Angle | 0 | 15 | 30 | 45 | 60 | 75 | 90 | 105 | 120 | 135 | 150 | 165 |
|---|---|---|---|---|---|---|---|---|---|---|---|---|---|
| 0.10 | 5 | 2309.00 | 2305.00 | 2286.00 | 2279.00 | 2278.00 | 2270.00 | 2287.00 | 2312.00 | 2326.00 | 2333.00 | 2329.00 | 2319.00 |
|  | 10 | 2166.00 | 2155.00 | 2148.00 | 2141.00 | 2157.00 | 2161.00 | 2183.00 | 2206.00 | 2223.00 | 2223.00 | 2214.00 | 2188.00 |
|  | 20 | 1654.00 | 1654.00 | 1657.00 | 1671.00 | 1703.00 | 1743.00 | 1780.00 | 1793.00 | 1791.00 | 1780.00 | 1754.00 | 1719.00 |
|  | 30 | 1083.00 | 1065.00 | 1049.00 | 1053.00 | 1094.00 | 1145.00 | 1172.00 | 1180.00 | 1153.00 | 1135.00 | 1138.00 | 1135.00 |
|  | 40 | 585.00 | 551.50 | 509.70 | 502.20 | 521.80 | 553.60 | 583.00 | 577.00 | 549.10 | 536.10 | 562.60 | 604.20 |
|  | 45 | 397.00 | 360.40 | 308.80 | 303.50 | 317.40 | 340.70 | 362.70 | 357.40 | 331.40 | 318.10 | 348.50 | 403.00 |
|  | 50 | 246.90 | 213.90 | 155.30 | 152.90 | 165.90 | 179.60 | 192.40 | 189.10 | 169.40 | 157.20 | 180.30 | 241.30 |
|  | 60 | 93.11 | 72.46 | 29.51 | 26.06 | 39.04 | 40.65 | 39.17 | 42.36 | 37.94 | 25.74 | 43.80 | 83.06 |
| 0.20 | 5 | 1409.00 | 1375.00 | 1337.00 | 1299.00 | 1288.00 | 1290.00 | 1319.00 | 1358.00 | 1402.00 | 1427.00 | 1423.00 | 1408.00 |
|  | 10 | 1359.00 | 1327.00 | 1294.00 | 1262.00 | 1250.00 | 1261.00 | 1289.00 | 1334.00 | 1374.00 | 1391.00 | 1378.00 | 1345.00 |
|  | 20 | 1125.00 | 1118.00 | 1108.00 | 1094.00 | 1097.00 | 1113.00 | 1140.00 | 1179.00 | 1205.00 | 1205.00 | 1168.00 | 1114.00 |
|  | 30 | 754.50 | 767.80 | 787.80 | 788.60 | 798.40 | 830.60 | 853.60 | 881.80 | 878.90 | 867.20 | 837.20 | 778.20 |
|  | 40 | 414.80 | 411.90 | 416.50 | 420.50 | 426.60 | 450.10 | 480.10 | 482.10 | 462.50 | 455.40 | 454.90 | 439.00 |
|  | 45 | 292.60 | 278.60 | 262.60 | 264.20 | 269.10 | 289.80 | 313.50 | 310.60 | 289.10 | 281.90 | 295.00 | 305.90 |
|  | 50 | 189.90 | 171.50 | 138.20 | 137.90 | 146.20 | 158.50 | 173.70 | 170.60 | 151.90 | 143.70 | 159.80 | 192.20 |
|  | 60 | 80.70 | 63.56 | 27.71 | 24.72 | 36.19 | 37.87 | 37.41 | 40.11 | 35.36 | 24.52 | 41.52 | 73.37 |
| 0.33 | 5 | 389.90 | 357.50 | 325.60 | 303.70 | 294.00 | 302.20 | 324.40 | 357.10 | 391.00 | 409.20 | 408.90 | 393.20 |
|  | 10 | 419.70 | 384.60 | 346.60 | 318.80 | 312.50 | 316.80 | 335.30 | 369.10 | 403.70 | 416.80 | 412.80 | 398.60 |
|  | 20 | 453.70 | 432.50 | 401.80 | 377.40 | 374.00 | 367.90 | 370.40 | 417.00 | 456.70 | 450.30 | 421.10 | 403.00 |
|  | 30 | 353.10 | 365.10 | 393.50 | 400.50 | 400.00 | 398.60 | 399.00 | 446.60 | 474.40 | 454.60 | 397.70 | 333.50 |
|  | 40 | 187.80 | 204.30 | 246.50 | 266.40 | 263.90 | 272.20 | 308.80 | 324.70 | 323.80 | 316.00 | 275.20 | 200.20 |
|  | 45 | 137.00 | 147.40 | 172.70 | 184.80 | 182.10 | 193.90 | 213.20 | 217.20 | 205.80 | 202.90 | 186.30 | 150.70 |
|  | 50 | 101.80 | 103.00 | 105.60 | 109.70 | 111.40 | 121.30 | 136.90 | 135.70 | 120.20 | 117.80 | 119.00 | 110.10 |
|  | 60 | 57.55 | 47.09 | 24.36 | 21.76 | 30.39 | 32.17 | 33.58 | 35.21 | 30.03 | 21.99 | 36.28 | 53.83 |

TABLE I

EP 0 787 311 B1

Orientation Angle

| Observation Angle | Entrance Angle | 0 | 15 | 30 | 45 | 60 | 75 | 90 | 105 | 120 | 135 | 150 | 165 |
|---|---|---|---|---|---|---|---|---|---|---|---|---|---|
| 0.50 | 5 | 50.17 | 50.25 | 47.86 | 47.95 | 58.51 | 80.81 | 100.50 | 97.25 | 78.85 | 64.34 | 59.76 | 58.64 |
| | 10 | 59.27 | 52.05 | 42.18 | 42.29 | 55.60 | 73.68 | 87.89 | 85.24 | 71.46 | 56.81 | 55.88 | 64.74 |
| | 20 | 116.50 | 83.98 | 41.74 | 37.37 | 52.03 | 54.02 | 51.56 | 59.55 | 64.80 | 50.70 | 53.44 | 92.81 |
| | 30 | 150.00 | 112.40 | 74.45 | 87.73 | 105.80 | 90.89 | 67.06 | 103.70 | 133.20 | 101.00 | 75.55 | 107.70 |
| | 40 | 60.67 | 78.46 | 89.98 | 120.20 | 133.30 | 123.30 | 109.90 | 141.80 | 165.50 | 140.00 | 87.60 | 69.23 |
| | 45 | 43.33 | 52.35 | 80.06 | 102.50 | 106.80 | 106.00 | 106.10 | 123.40 | 130.00 | 118.60 | 78.84 | 45.44 |
| | 50 | 28.18 | 36.49 | 60.00 | 70.06 | 70.50 | 74.96 | 84.09 | 87.55 | 81.51 | 80.74 | 62.62 | 33.45 |
| | 60 | 27.94 | 25.36 | 18.75 | 16.77 | 21.22 | 23.13 | 26.66 | 26.77 | 21.43 | 17.71 | 26.90 | 27.36 |
| 1.00 | 5 | 38.98 | 24.34 | 19.63 | 21.00 | 37.07 | 34.62 | 36.22 | 38.21 | 38.79 | 21.18 | 22.17 | 32.98 |
| | 10 | 47.53 | 25.67 | 19.67 | 24.54 | 37.37 | 40.57 | 37.36 | 40.16 | 37.63 | 24.56 | 21.58 | 36.00 |
| | 20 | 58.15 | 35.44 | 21.28 | 33.31 | 39.29 | 43.74 | 37.06 | 47.64 | 39.59 | 35.80 | 22.68 | 39.16 |
| | 30 | 21.92 | 18.47 | 23.09 | 34.16 | 32.91 | 35.81 | 35.15 | 47.26 | 38.43 | 36.77 | 21.26 | 16.40 |
| | 40 | 40.77 | 23.46 | 12.03 | 11.12 | 12.22 | 10.75 | 15.79 | 13.96 | 15.11 | 11.60 | 15.48 | 20.07 |
| | 45 | 30.04 | 20.53 | 7.93 | 12.27 | 28.41 | 17.54 | 8.19 | 16.55 | 33.64 | 12.17 | 11.45 | 18.13 |
| | 50 | 12.91 | 11.90 | 6.08 | 14.07 | 31.62 | 22.88 | 8.00 | 19.72 | 36.86 | 17.44 | 6.91 | 11.13 |
| | 60 | 1.89 | 3.60 | 4.66 | 5.52 | 6.02 | 6.82 | 7.56 | 7.92 | 6.96 | 8.16 | 5.88 | 1.94 |
| 1.50 | 5 | 36.31 | 10.34 | 8.72 | 10.29 | 24.52 | 18.39 | 12.53 | 18.37 | 30.81 | 11.74 | 8.57 | 15.90 |
| | 10 | 34.68 | 9.69 | 8.54 | 10.58 | 27.41 | 16.87 | 12.69 | 17.05 | 32.06 | 11.81 | 8.27 | 13.46 |
| | 20 | 24.45 | 9.93 | 9.41 | 8.55 | 20.73 | 10.94 | 11.79 | 13.17 | 26.16 | 11.58 | 9.49 | 10.80 |
| | 30 | 27.63 | 12.27 | 8.53 | 8.31 | 10.78 | 11.53 | 9.50 | 13.40 | 12.26 | 10.92 | 10.53 | 12.64 |
| | 40 | 12.94 | 9.07 | 5.67 | 8.55 | 15.27 | 13.44 | 4.91 | 13.99 | 16.91 | 9.15 | 7.78 | 9.00 |
| | 45 | 18.24 | 6.82 | 6.23 | 3.74 | 3.52 | 5.08 | 3.82 | 6.29 | 4.43 | 4.79 | 7.06 | 8.25 |
| | 50 | 9.04 | 4.56 | 5.81 | 3.27 | 10.33 | 4.81 | 4.49 | 4.04 | 11.75 | 3.66 | 5.30 | 5.14 |
| | 60 | 1.48 | 4.88 | 2.92 | 3.47 | 5.65 | 4.87 | 2.68 | 3.71 | 6.50 | 4.77 | 3.66 | 1.74 |

TABLE I (cont'd)

EP 0 787 311 B1

| Observation Angle | Entrance Angle | Orientation Angle | | | | | | | | | | | |
|---|---|---|---|---|---|---|---|---|---|---|---|---|---|
| | | 0 | 15 | 30 | 45 | 60 | 75 | 90 | 105 | 120 | 135 | 150 | 165 |
| 2.00 | 5 | 17.14 | 5.94 | 5.69 | 5.70 | 10.80 | 9.93 | 6.30 | 11.08 | 13.10 | 6.10 | 5.11 | 7.61 |
| | 10 | 16.37 | 4.90 | 4.54 | 5.60 | 10.77 | 7.97 | 4.88 | 9.77 | 13.22 | 5.74 | 3.99 | 6.01 |
| | 20 | 16.09 | 5.31 | 3.23 | 4.73 | 12.30 | 6.84 | 4.69 | 8.21 | 15.39 | 5.77 | 3.55 | 5.80 |
| | 30 | 12.05 | 6.24 | 3.54 | 4.12 | 9.74 | 4.48 | 5.29 | 5.71 | 12.17 | 4.70 | 4.64 | 5.65 |
| | 40 | 7.20 | 4.01 | 4.47 | 2.09 | 6.60 | 4.88 | 4.20 | 3.70 | 6.53 | 2.68 | 5.07 | 3.62 |
| | 45 | 7.78 | 2.55 | 4.62 | 2.60 | 8.18 | 5.20 | 4.18 | 4.80 | 9.24 | 2.83 | 4.85 | 2.28 |
| | 50 | 6.60 | 2.65 | 4.22 | 1.48 | 2.19 | 2.80 | 2.50 | 3.20 | 2.85 | 1.87 | 5.38 | 2.27 |
| | 60 | 1.23 | 4.72 | 2.83 | 1.87 | 4.74 | 2.68 | 2.87 | 1.73 | 5.37 | 2.17 | 2.64 | 1.12 |

TABLE I (cont'd)

Orientation Angle

| Observation Angle | Entrance Angle | 0 | 15 | 30 | 45 | 60 | 75 | 90 | 105 | 120 | 135 | 150 | 165 |
|---|---|---|---|---|---|---|---|---|---|---|---|---|---|
| 0.10 | 5 | -2097.00 | -2089.00 | -2074.00 | 2046.00 | -2014.00 | -1999.00 | -1982.00 | -1989.00 | -2003.00 | -2021.00 | -2044.00 | -2051.00 |
| | 10 | -1964.00 | -1956.00 | -1939.00 | -1911.00 | -1682.00 | -1860.00 | -1850.00 | -1856.00 | -1872.00 | -1879.00 | -1890.00 | -1889.00 |
| | 20 | -1450.00 | -1452.00 | -1444.00 | -1430.00 | -1412.00 | -1398.00 | -1388.00 | -1387.00 | -1391.00 | -1396.00 | -1391.00 | -1374.00 |
| | 30 | -855.90 | -856.30 | -859.90 | -858.30 | -859.30 | -863.70 | -863.00 | -845.60 | -827.90 | -818.00 | -819.80 | -811.80 |
| | 40 | -414.50 | -409.60 | -399.30 | -393.00 | -405.00 | -421.00 | -423.70 | -405.70 | -375.60 | -361.70 | -377.70 | -397.00 |
| | 45 | -270.60 | -263.10 | -245.70 | -239.50 | -251.10 | -265.50 | -268.30 | -252.30 | -227.80 | -215.10 | -231.40 | -259.30 |
| | 50 | -171.20 | -158.10 | -137.40 | -131.60 | -140.00 | -150.00 | -151.20 | -140.00 | -123.40 | -113.30 | -125.90 | -155.90 |
| | 60 | -65.23 | -56.89 | +30.63 | +27.20 | -34.99 | -36.93 | -34.45 | -34.03 | -30.15 | -21.82 | -27.57 | -53.64 |
| 0.20 | 5 | -1363.00 | -1339.00 | -1293.00 | 1230.00 | -1172.00 | -1135.00 | -1127.00 | -1152.00 | -1196.00 | -1243.00 | -1289.00 | -1315.00 |
| | 10 | -1301.00 | -1279.00 | -1233.00 | -1179.00 | -1131.00 | -1097.00 | -1093.00 | -1116.00 | -1159.00 | -1197.00 | -1221.00 | -1230.00 |
| | 20 | -1032.00 | -1022.00 | -1001.00 | -977.70 | -955.50 | -935.70 | -932.10 | -948.60 | -975.40 | -987.00 | -979.50 | -962.10 |
| | 30 | -664.70 | -662.70 | -664.80 | -659.70 | -658.50 | -662.30 | -662.80 | -657.00 | -650.60 | -647.20 | -644.30 | -625.80 |
| | 40 | -338.10 | -338.70 | -340.60 | -335.90 | -343.80 | -358.00 | -360.40 | -345.50 | -320.10 | -311.40 | -324.10 | -327.50 |
| | 45 | -221.40 | -218.20 | -213.30 | -210.00 | -218.10 | -231.30 | -234.00 | -219.20 | -197.00 | -188.30 | -204.50 | -218.40 |
| | 50 | -144.00 | -135.20 | -124.50 | -121.40 | -127.90 | -138.00 | -140.20 | -129.20 | -112.80 | -104.80 | -115.70 | -136.00 |
| | 60 | -58.84 | -52.58 | +28.78 | +26.20 | -33.24 | -35.30 | -33.39 | -32.72 | -28.59 | -20.92 | -26.53 | -49.69 |
| 0.33 | 5 | +507.60 | +483.20 | +431.90 | +372.20 | +328.70 | +310.00 | -315.00 | -332.70 | -364.10 | -407.10 | +454.10 | +485.30 |
| | 10 | +525.80 | +493.90 | +433.80 | +381.70 | +345.80 | +327.30 | -330.70 | -351.20 | -385.20 | +422.30 | +457.40 | +487.50 |
| | 20 | +528.30 | +494.60 | +435.30 | +402.90 | +392.40 | +379.10 | +374.00 | -396.90 | -428.70 | -442.10 | +452.00 | +471.80 |
| | 30 | +411.80 | +396.60 | +373.30 | +361.80 | -372.00 | -370.80 | -364.60 | -375.90 | -387.20 | -384.10 | -381.50 | +375.10 |
| | 40 | +224.60 | +227.80 | +237.00 | -234.90 | -242.50 | -254.10 | -254.00 | -247.80 | -233.60 | -230.50 | -235.10 | +222.90 |
| | 45 | +147.60 | +150.20 | -159.40 | -160.80 | -166.50 | -178.30 | -180.70 | -170.00 | -153.90 | -150.80 | -157.50 | +153.00 |
| | 50 | -97.87 | -95.22 | -97.57 | -99.15 | -103.30 | -113.10 | -116.30 | -106.80 | -92.52 | -88.46 | -95.76 | -100.90 |
| | 60 | -46.30 | -44.01 | +24.89 | +23.59 | -29.19 | -31.47 | -30.70 | -29.65 | -25.20 | -18.97 | -24.10 | -41.58 |

TABLE II                   + = Area where gain occurred

EP 0 787 311 B1

EP 0 787 311 B1

Orientation Angle

| Observation Angle | Entrance Angle | 0 | 15 | 30 | 45 | 60 | 75 | 90 | 105 | 120 | 135 | 150 | 165 |
|---|---|---|---|---|---|---|---|---|---|---|---|---|---|
| 0.50 | 5 | + 145.30 | + 132.30 | + 104.20 | + 71.82 | + 67.58 | + 93.09 | + 116.70 | + 111.10 | + 87.69 | + 85.07 | + 116.30 | + 143.00 |
|  | 10 | + 151.20 | + 132.30 | + 99.96 | + 70.62 | + 66.26 | + 86.15 | + 104.30 | + 101.70 | + 84.56 | + 83.47 | + 116.60 | + 147.70 |
|  | 20 | + 196.20 | + 161.10 | + 106.70 | + 79.43 | + 78.32 | + 83.77 | + 85.91 | + 94.06 | + 96.43 | + 97.58 | + 126.80 | + 171.90 |
|  | 30 | + 215.80 | + 177.90 | + 124.50 | + 111.70 | + 127.50 | + 125.10 | + 111.80 | + 129.70 | + 145.70 | + 139.60 | + 145.70 | + 172.50 |
|  | 40 | + 130.30 | + 123.00 | + 113.70 | − 116.60 | − 130.90 | + 134.70 | + 122.50 | − 132.00 | − 136.00 | − 132.10 | + 125.50 | + 118.80 |
|  | 45 | + 82.16 | + 83.60 | + 89.17 | − 95.88 | − 104.70 | + 111.20 | − 106.00 | − 106.40 | − 102.30 | − 100.90 | + 97.07 | + 86.19 |
|  | 50 | + 50.94 | + 52.56 | + 60.81 | − 66.84 | + 70.79 | + 78.50 | − 79.08 | − 74.26 | − 65.69 | − 65.20 | + 65.89 | + 58.88 |
|  | 60 | + 28.78 | + 30.75 | − 18.57 | + 18.78 | + 22.29 | + 24.97 | − 25.65 | − 24.00 | − 19.49 | − 15.63 | − 19.71 | + 29.19 |
| 1.00 | 5 | + 76.00 | + 32.23 | + 23.44 | − 18.89 | − 33.83 | − 23.78 | − 27.55 | − 29.42 | + 38.89 | − 23.17 | − 23.41 | + 33.35 |
|  | 10 | + 71.70 | + 33.27 | − 19.17 | − 18.84 | − 34.75 | − 23.68 | − 24.03 | − 27.92 | + 39.63 | − 22.62 | − 20.82 | − 32.99 |
|  | 20 | + 61.60 | + 37.57 | − 14.29 | − 20.14 | − 33.07 | − 26.00 | − 20.76 | − 26.87 | + 41.24 | − 25.59 | − 18.41 | − 33.27 |
|  | 30 | + 41.55 | + 27.52 | − 15.28 | − 21.45 | + 33.51 | − 29.51 | − 23.82 | − 28.16 | + 38.91 | − 25.53 | − 19.09 | + 28.28 |
|  | 40 | + 55.62 | + 31.41 | − 11.93 | + 14.25 | + 20.66 | + 19.08 | − 10.13 | + 15.05 | + 21.19 | + 21.05 | + 16.84 | + 27.20 |
|  | 45 | + 39.98 | + 24.86 | + 11.41 | + 15.28 | + 28.44 | + 23.06 | + 8.92 | + 18.02 | − 29.91 | + 25.55 | + 16.11 | + 19.16 |
|  | 50 | + 16.87 | + 14.35 | + 11.13 | + 15.38 | − 27.90 | + 24.30 | + 11.74 | − 18.64 | + 28.10 | + 24.94 | + 15.08 | − 10.88 |
|  | 60 | + 4.00 | + 22.31 | + 6.15 | + 6.85 | + 7.94 | + 9.80 | + 9.91 | + 8.88 | + 7.27 | − 8.03 | + 8.07 | + 6.88 |
| 1.50 | 5 | − 22.51 | − 10.10 | + 11.51 | − 7.19 | − 13.33 | − 12.54 | − 11.54 | − 13.40 | − 15.64 | + 8.46 | + 12.51 | − 9.88 |
|  | 10 | − 23.27 | − 9.31 | + 10.91 | − 7.52 | − 12.59 | − 11.70 | − 10.69 | − 12.42 | − 14.96 | − 8.45 | + 11.47 | − 9.49 |
|  | 20 | + 25.02 | + 10.08 | − 9.00 | − 7.75 | − 12.72 | − 8.81 | − 10.19 | − 10.14 | − 15.70 | − 8.03 | + 9.63 | − 9.91 |
|  | 30 | − 26.90 | − 8.15 | − 5.42 | − 5.82 | + 12.62 | − 7.09 | − 7.13 | − 6.31 | + 15.24 | − 5.94 | − 6.80 | − 6.98 |
|  | 40 | + 14.52 | − 5.88 | + 6.02 | − 5.05 | − 12.32 | − 7.90 | + 6.06 | − 6.61 | − 13.84 | − 6.15 | − 6.85 | − 5.58 |
|  | 45 | + 21.01 | − 6.79 | + 6.31 | + 4.56 | + 7.36 | + 6.09 | + 5.05 | − 4.95 | + 7.24 | + 6.10 | + 7.54 | − 6.78 |
|  | 50 | + 13.25 | + 6.46 | − 5.30 | + 5.09 | + 11.67 | + 8.19 | + 3.51 | + 5.04 | + 12.14 | + 8.41 | + 6.59 | + 6.14 |
|  | 60 | + 2.13 | + 39.30 | + 3.25 | + 3.67 | + 5.95 | + 5.61 | + 3.14 | − 3.48 | − 5.37 | + 5.70 | + 3.71 | + 3.12 |

TABLE II (cont'd)                    + = Area where gain occurred

## Orientation Angle

| Observation Angle | Entrance Angle | 0 | | 15 | | 30 | | 45 | | 60 | | 75 | | 90 | | 105 | | 120 | | 135 | | 150 | | 165 | |
|---|---|---|---|---|---|---|---|---|---|---|---|---|---|---|---|---|---|---|---|---|---|---|---|---|---|
| 2.00 | 5 | − | 12.04 | − | 3.69 | − | 3.87 | − | 2.91 | − | 7.02 | − | 5.25 | − | 6.00 | − | 5.36 | − | 7.89 | − | 3.17 | − | 4.21 | − | 3.51 |
| | 10 | − | 11.38 | − | 3.33 | − | 3.34 | − | 3.11 | − | 7.07 | − | 4.87 | + | 5.04 | − | 4.83 | − | 7.94 | − | 3.22 | − | 3.71 | − | 3.46 |
| | 20 | − | 12.58 | − | 4.46 | − | 2.50 | − | 3.08 | − | 6.05 | − | 4.26 | − | 3.25 | − | 4.35 | − | 8.05 | − | 3.60 | − | 2.98 | − | 5.18 |
| | 30 | − | 14.15 | − | 4.19 | − | 2.60 | | 4.12 | − | 6.41 | − | 3.48 | − | 3.71 | − | 4.31 | − | 8.40 | − | 4.53 | − | 2.74 | − | 4.08 |
| | 40 | − | 6.88 | − | 2.75 | − | 1.98 | + | 2.41 | + | 6.61 | − | 2.80 | − | 1.92 | − | 2.25 | + | 8.99 | − | 2.07 | − | 1.85 | − | 2.83 |
| | 45 | + | 9.59 | − | 2.52 | − | 2.14 | − | 2.11 | − | 6.81 | − | 3.00 | − | 2.08 | − | 2.44 | − | 7.59 | − | 2.10 | − | 2.24 | + | 2.77 |
| | 50 | + | 9.49 | − | 2.04 | − | 2.88 | + | 1.80 | + | 3.55 | − | 2.14 | + | 2.54 | − | 1.76 | + | 3.53 | + | 2.24 | − | 3.32 | − | 2.02 |
| | 60 | + | 1.36 | + | 50.40 | − | 2.02 | + | 2.67 | + | 5.06 | + | 3.66 | − | 2.01 | − | 2.01 | − | 4.87 | + | 3.58 | − | 2.35 | + | 3.31 |

TABLE II (cont'd)                    + = Area where gain occurred

All values have units of cd/lux/m$^2$         Orientation Angle

| Observation Angle | Entrance Angle (B1) | 0 | 15 | 30 | 45 | 60 | 75 | 90 | 105 | 120 | 135 | 150 | 165 |
|---|---|---|---|---|---|---|---|---|---|---|---|---|---|
| 0.10 | 5 | 2536.00 | 2538.00 | 2527.00 | 2498.00 | 2469.00 | 2439.00 | 2418.00 | 2407.00 | 2411.00 | 2435.00 | 2457.00 | 2485.00 |
| | 10 | 2400.00 | 2400.00 | 2388.00 | 2375.00 | 2333.00 | 2308.00 | 2275.00 | 2251.00 | 2247.00 | 2263.00 | 2282.00 | 2312.00 |
| | 20 | 1862.00 | 1853.00 | 1851.00 | 1851.00 | 1831.00 | 1791.00 | 1748.00 | 1715.00 | 1688.00 | 1702.00 | 1712.00 | 1735.00 |
| | 30 | 1181.00 | 1159.00 | 1146.00 | 1149.00 | 1141.00 | 1106.00 | 1057.00 | 1039.00 | 1022.00 | 1028.00 | 1058.00 | 1101.00 |
| | 40 | 603.30 | 584.80 | 561.40 | 539.20 | 525.50 | 518.70 | 505.80 | 484.80 | 463.20 | 483.60 | 519.00 | 555.70 |
| | 45 | 400.60 | 384.40 | 354.30 | 327.20 | 318.00 | 320.20 | 313.20 | 297.90 | 278.00 | 292.10 | 327.30 | 362.10 |
| | 50 | 251.10 | 232.40 | 204.50 | 178.50 | 172.30 | 179.60 | 181.50 | 167.60 | 153.70 | 158.30 | 185.30 | 214.10 |
| | 60 | 90.98 | 96.81 | 47.51 | 33.20 | 36.75 | 40.39 | 39.38 | 38.97 | 35.26 | 29.55 | 42.24 | 72.55 |
| 0.20 | 5 | 1836.00 | 1837.00 | 1801.00 | 1752.00 | 1690.00 | 1627.00 | 1582.00 | 1573.00 | 1605.00 | 1663.00 | 1743.00 | 1809.00 |
| | 10 | 1746.00 | 1737.00 | 1724.00 | 1696.00 | 1641.00 | 1576.00 | 1516.00 | 1493.00 | 2520.00 | 1573.00 | 1639.00 | 1715.00 |
| | 20 | 1381.00 | 1378.00 | 1390.00 | 1415.00 | 1406.00 | 1333.00 | 1256.00 | 1230.00 | 1239.00 | 1267.00 | 1306.00 | 1366.00 |
| | 30 | 907.40 | 901.70 | 922.20 | 960.40 | 965.60 | 914.20 | 854.70 | 835.40 | 834.50 | 848.60 | 872.80 | 906.30 |
| | 40 | 482.80 | 474.50 | 484.10 | 487.20 | 478.60 | 468.90 | 448.20 | 427.90 | 410.40 | 432.50 | 458.10 | 475.00 |
| | 45 | 323.40 | 315.10 | 309.30 | 299.40 | 293.00 | 293.40 | 285.00 | 269.20 | 250.80 | 266.80 | 296.30 | 312.70 |
| | 50 | 207.20 | 197.40 | 184.20 | 168.40 | 163.50 | 169.80 | 172.00 | 157.40 | 143.70 | 150.20 | 172.00 | 188.70 |
| | 60 | 83.32 | 91.09 | 44.66 | 32.46 | 35.79 | 39.51 | 38.67 | 38.10 | 34.25 | 29.08 | 40.95 | 69.41 |
| 0.33 | 5 | 836.80 | 823.10 | 776.30 | 716.90 | 652.30 | 587.10 | 551.40 | 551.20 | 587.30 | 652.90 | 734.50 | 819.10 |
| | 10 | 817.70 | 802.10 | 763.90 | 740.00 | 689.20 | 610.00 | 550.40 | 552.40 | 598.40 | 656.10 | 726.10 | 819.50 |
| | 20 | 734.60 | 708.50 | 697.80 | 748.70 | 755.30 | 652.50 | 557.90 | 563.60 | 616.90 | 645.10 | 675.70 | 761.90 |
| | 30 | 540.60 | 526.40 | 553.70 | 633.70 | 663.30 | 586.20 | 506.20 | 509.20 | 534.30 | 550.60 | 545.10 | 572.20 |
| | 40 | 293.70 | 299.40 | 340.10 | 381.10 | 389.70 | 366.40 | 336.20 | 320.40 | 313.90 | 336.50 | 336.80 | 325.90 |
| | 45 | 200.10 | 206.00 | 231.80 | 249.30 | 249.10 | 245.00 | 231.90 | 217.30 | 204.40 | 222.00 | 229.40 | 217.50 |
| | 50 | 135.60 | 135.10 | 144.40 | 147.00 | 144.30 | 148.70 | 149.20 | 134.70 | 122.80 | 131.20 | 141.70 | 138.10 |
| | 60 | 66.25 | 79.21 | 38.47 | 30.38 | 33.21 | 36.80 | 36.51 | 35.45 | 31.37 | 27.26 | 37.01 | 60.94 |

TABLE III

EP 0 787 311 B1

All values have units of cd/lux/m$^2$     Orientation Angle

| Observation Angle | Entrance Angle (B1) | 0 | 15 | 30 | 45 | 60 | 75 | 90 | 105 | 120 | 135 | 150 | 165 |
|---|---|---|---|---|---|---|---|---|---|---|---|---|---|
| 0.50 | 5 | 158.50 | 142.20 | 109.40 | 96.41 | 111.30 | 132.10 | 140.40 | 125.70 | 103.30 | 90.86 | 96.83 | 124.30 |
| | 10 | 197.30 | 164.90 | 119.30 | 114.40 | 123.20 | 119.90 | 113.90 | 110.30 | 111.70 | 108.60 | 108.40 | 142.00 |
| | 20 | 279.50 | 218.00 | 155.50 | 188.00 | 213.70 | 142.80 | 98.49 | 124.90 | 174.20 | 175.10 | 152.60 | 206.10 |
| | 30 | 269.20 | 218.00 | 190.30 | 266.60 | 321.30 | 227.50 | 158.90 | 195.80 | 246.20 | 244.60 | 191.90 | 226.00 |
| | 40 | 142.50 | 138.50 | 162.80 | 228.30 | 263.10 | 223.00 | 179.00 | 181.40 | 196.80 | 206.00 | 169.20 | 156.20 |
| | 45 | 88.43 | 95.80 | 127.80 | 171.70 | 185.70 | 171.40 | 149.20 | 143.00 | 142.50 | 154.70 | 133.30 | 111.00 |
| | 50 | 57.93 | 63.43 | 87.18 | 110.90 | 114.10 | 114.40 | 110.40 | 99.03 | 91.62 | 100.50 | 92.51 | 72.97 |
| | 60 | 40.98 | 60.49 | 28.04 | 26.28 | 28.26 | 31.73 | 32.03 | 30.32 | 26.00 | 23.66 | 29.35 | 46.82 |
| 1.00 | 5 | 68.52 | 57.74 | 35.22 | 20.09 | 29.29 | 33.05 | 28.39 | 24.87 | 30.07 | 26.56 | 37.65 | 77.89 |
| | 10 | 63.86 | 59.27 | 34.79 | 30.23 | 41.97 | 48.04 | 32.15 | 29.84 | 36.74 | 33.58 | 39.80 | 84.78 |
| | 20 | 36.52 | 43.92 | 27.91 | 38.85 | 73.34 | 77.59 | 44.49 | 44.51 | 52.44 | 32.94 | 39.42 | 65.45 |
| | 30 | 46.55 | 30.41 | 19.92 | 21.75 | 32.49 | 39.46 | 28.45 | 21.50 | 17.36 | 14.33 | 28.36 | 38.55 |
| | 40 | 72.31 | 41.15 | 13.31 | 25.61 | 62.55 | 25.44 | 8.09 | 22.24 | 47.18 | 31.18 | 11.86 | 33.85 |
| | 45 | 44.48 | 31.01 | 11.57 | 31.31 | 73.86 | 38.10 | 11.30 | 31.32 | 56.56 | 38.62 | 8.64 | 26.41 |
| | 50 | 15.69 | 15.36 | 9.55 | 28.92 | 57.34 | 39.87 | 20.20 | 29.98 | 43.91 | 36.07 | 7.96 | 13.29 |
| | 60 | 2.88 | 38.42 | 4.79 | 11.45 | 13.38 | 15.23 | 14.34 | 13.11 | 10.98 | 11.91 | 7.06 | 24.33 |
| 1.50 | 5 | 29.57 | 9.36 | 9.35 | 8.93 | 10.21 | 9.78 | 7.78 | 11.54 | 10.19 | 10.24 | 8.43 | 12.43 |
| | 10 | 35.19 | 10.34 | 10.19 | 9.14 | 11.52 | 9.46 | 8.23 | 9.22 | 9.16 | 9.77 | 9.29 | 14.75 |
| | 20 | 28.03 | 13.92 | 7.92 | 5.68 | 10.40 | 8.20 | 9.49 | 7.00 | 8.56 | 5.84 | 8.22 | 16.34 |
| | 30 | 17.22 | 12.07 | 7.69 | 8.39 | 30.60 | 15.03 | 6.28 | 14.41 | 28.25 | 11.53 | 7.82 | 12.70 |
| | 40 | 26.01 | 8.40 | 7.31 | 7.16 | 6.95 | 8.31 | 6.89 | 5.40 | 4.91 | 4.54 | 7.98 | 5.13 |
| | 45 | 28.67 | 9.31 | 7.50 | 7.44 | 18.27 | 5.56 | 4.22 | 5.06 | 14.65 | 5.16 | 8.88 | 5.81 |
| | 50 | 12.79 | 7.34 | 6.47 | 8.23 | 30.81 | 12.16 | 4.57 | 9.37 | 24.94 | 10.04 | 7.34 | 4.69 |
| | 60 | 1.38 | 45.78 | 2.48 | 3.86 | 8.52 | 7.66 | 3.45 | 5.32 | 7.21 | 6.30 | 1.47 | 32.71 |

TABLE III (cont'd)

EP 0 787 311 B1

All values have units of cd/lux/m²       Orientation Angle

| Observation Angle | Entrance Angle (B1) | 0 | 15 | 30 | 45 | 60 | 75 | 90 | 105 | 120 | 135 | 150 | 165 |
|---|---|---|---|---|---|---|---|---|---|---|---|---|---|
| 2.00 | 5 | 19.56 | 4.80 | 3.06 | 3.40 | 6.19 | 3.83 | 3.68 | 4.43 | 5.62 | 3.61 | 3.51 | 5.98 |
| | 10 | 19.88 | 4.39 | 3.48 | 4.07 | 8.50 | 3.98 | 2.93 | 4.14 | 6.40 | 3.78 | 3.46 | 5.68 |
| | 20 | 19.05 | 4.91 | 4.03 | 3.51 | 6.07 | 3.49 | 3.54 | 3.37 | 4.80 | 3.25 | 3.75 | 6.03 |
| | 30 | 17.14 | 4.43 | 3.87 | 2.64 | 5.89 | 3.33 | 4.32 | 3.40 | 5.34 | 2.71 | 4.18 | 5.43 |
| | 40 | 5.74 | 3.48 | 4.04 | 2.76 | 14.86 | 6.56 | 2.27 | 4.85 | 12.35 | 4.02 | 3.83 | 3.25 |
| | 45 | 15.68 | 3.36 | 4.46 | 2.73 | 3.17 | 3.54 | 2.08 | 2.53 | 2.56 | 2.76 | 3.02 | 3.54 |
| | 50 | 10.74 | 2.86 | 4.30 | 3.99 | 10.10 | 2.35 | 2.99 | 2.24 | 9.06 | 2.08 | 3.37 | 2.35 |
| | 60 | 0.96 | 44.65 | 2.58 | 2.66 | 7.63 | 4.70 | 1.41 | 2.93 | 6.85 | 3.44 | 2.35 | 29.96 |

TABLE III (cont'd)

EP 0 787 311 B1

All values have units of cd/lux/m²         Orientation Angle

| Observation Angle | Entrance Angle (B1) | 0 | 15 | 30 | 45 | 60 | 75 | 90 | 105 | 120 | 135 | 150 | 165 |
|---|---|---|---|---|---|---|---|---|---|---|---|---|---|
| 0.10 | 5 | 1209.00 | 1204.00 | 1196.00 | 1186.00 | 1173.00 | 1160.00 | 1158.00 | 1158.00 | 1166.00 | 1177.00 | 1195.00 | 1203.00 |
| | 10 | 1141.00 | 1132.00 | 1121.00 | 1114.00 | 1107.00 | 1098.00 | 1094.00 | 1097.00 | 1104.00 | 1121.00 | 1134.00 | 1143.00 |
| | 20 | 868.30 | 867.00 | 862.40 | 865.40 | 864.20 | 858.20 | 850.20 | 857.30 | 873.40 | 883.90 | 890.10 | 895.80 |
| | 30 | 561.10 | 553.40 | 537.00 | 535.10 | 539.30 | 532.80 | 516.70 | 532.80 | 553.50 | 563.60 | 556.40 | 562.10 |
| | 40 | 284.50 | 273.10 | 257.60 | 257.70 | 255.60 | 246.60 | 239.50 | 246.20 | 266.30 | 274.80 | 269.10 | 273.50 |
| | 45 | 184.00 | 171.80 | 157.70 | 156.50 | 155.60 | 148.40 | 145.40 | 150.10 | 161.40 | 169.20 | 164.10 | 169.80 |
| | 50 | 110.70 | 102.20 | 89.76 | 88.25 | 87.51 | 83.98 | 85.02 | 85.55 | 89.93 | 95.38 | 92.87 | 100.20 |
| | 60 | 38.46 | 33.86 | 21.53 | 17.83 | 18.97 | 19.86 | 19.50 | 19.85 | 19.75 | 18.63 | 20.59 | 81.92 + |
| 0.20 | 5 | 874.70 | 876.40 | 854.50 | 824.00 | 790.80 | 763.90 | 748.30 | 751.70 | 770.90 | 800.00 | 827.10 | 853.80 |
| | 10 | 841.50 | 831.90 | 811.20 | 785.90 | 759.50 | 734.40 | 720.10 | 725.90 | 749.90 | 772.70 | 794.30 | 812.80 |
| | 20 | 675.00 | 669.60 | 647.10 | 644.50 | 642.50 | 619.60 | 598.40 | 614.80 | 650.10 | 661.50 | 649.90 | 654.10 |
| | 30 | 458.60 | 446.60 | 428.10 | 436.70 | 447.50 | 430.70 | 406.20 | 428.70 | 465.60 | 469.50 | 441.00 | 431.60 |
| | 40 | 240.30 | 229.20 | 218.40 | 227.60 | 230.40 | 218.70 | 210.60 | 218.30 | 243.20 | 249.80 | 230.90 | 224.10 |
| | 45 | 156.10 | 146.00 | 137.50 | 142.40 | 143.90 | 136.20 | 133.20 | 137.80 | 151.50 | 157.80 | 146.10 | 144.70 |
| | 50 | 95.25 | 88.01 | 79.84 | 82.24 | 82.67 | 78.96 | 80.15 | 80.58 | 85.19 | 90.91 | 85.42 | 88.51 |
| | 60 | 35.51 | 31.41 | 20.06 | 17.19 | 18.39 | 19.30 | 19.11 | 19.41 | 19.22 | 18.27 | 19.95 | 76.54 + |
| 0.33 | 5 | 424.90 | 427.20 | 402.40 | 372.90 | 345.10 | 328.70 | 322.40 | 329.00 | 338.80 | 346.80 | 363.70 | 394.20 |
| | 10 | 434.70 | 426.90 | 392.80 | 373.20 | 355.90 | 330.70 | 316.30 | 326.30 | 351.20 | 356.50 | 356.80 | 387.80 |
| | 20 | 417.80 | 398.00 | 348.50 | 354.90 | 369.50 | 329.60 | 295.30 | 317.80 | 370.50 | 366.90 | 326.80 | 349.90 |
| | 30 | 320.60 | 300.10 | 263.60 | 288.20 | 313.10 | 282.10 | 247.70 | 271.20 | 326.50 | 320.50 | 263.60 | 262.70 |
| | 40 | 171.90 | 161.80 | 151.70 | 171.10 | 184.20 | 169.10 | 158.10 | 165.90 | 196.20 | 198.30 | 162.60 | 150.50 |
| | 45 | 113.70 | 105.60 | 102.50 | 115.20 | 122.60 | 113.00 | 109.30 | 114.00 | 130.40 | 134.30 | 112.10 | 104.00 |
| | 50 | 69.95 | 64.69 | 61.95 | 69.72 | 72.68 | 68.80 | 70.16 | 70.37 | 76.12 | 81.05 | 70.44 | 66.92 |
| | 60 | 29.24 | 26.93 | 17.11 | 15.75 | 17.03 | 17.89 | 18.05 | 18.29 | 18.02 | 17.31 | 18.02 | 67.67 + |

TABLE IV

EP 0 787 311 B1

All values have units of cd/lux/m²                    Orientation Angle

| Observation Angle | Entrance Angle (B1) | 0 | 15 | 30 | 45 | 60 | 75 | 90 | 105 | 120 | 135 | 150 | 165 |
|---|---|---|---|---|---|---|---|---|---|---|---|---|---|
| 0.50 | 5 | 142.30 | 148.80 + | 144.90 + | 139.90 + | 152.50 + | 193.90 + | 231.60 + | 222.00 + | 179.10 + | 142.70 + | 127.40 + | 134.80 + |
| | 10 | 162.30 | 159.00 | 146.60 + | 145.80 + | 150.00 + | 175.30 + | 209.00 + | 199.80 + | 168.10 + | 142.70 + | 129.20 + | 146.20 + |
| | 20 | 204.00 | 181.50 | 144.30 | 156.20 | 164.70 | 150.00 + | 158.80 + | 157.90 + | 165.30 | 152.80 | 130.00 | 161.50 |
| | 30 | 204.70 | 171.10 | 125.70 | 150.60 | 179.30 | 144.10 | 124.90 | 134.90 | 181.50 | 165.00 | 120.90 | 145.40 |
| | 40 | 119.00 | 105.10 | 85.81 | 105.50 | 131.20 | 109.70 | 96.82 | 103.30 | 139.30 | 132.10 | 91.65 | 92.34 |
| | 45 | 75.60 | 68.02 | 62.12 | 77.38 | 93.77 | 80.79 | 75.07 | 79.22 | · 100.80 | 98.10 | 69.50 | 64.41 |
| | 50 | 43.14 | 40.26 | 39.78 | 50.78 | 58.25 | 53.33 | 53.82 | 53.93 | 62.06 | 64.39 | 48.16 | 42.24 |
| | 60 | 20.29 | 22.19 | 12.70 | 13.19 | 14.57 | 15.31 | 15.97 | 16.03 | 15.60 | 15.34 | 14.68 | 56.87 |
| 1.50 | 5 | 37.06 + | 18.10 + | 11.41 + | 13.78 + | 21.51 + | 20.75 + | 11.19 + | 14.09 + | 22.12 + | 12.43 + | 14.49 + | 9.62 |
| | 10 | 40.90 + | 20.43 + | 10.93 + | 11.70 + | 24.84 + | 19.65 + | 11.49 + | 13.49 + | 20.33 + | 11.59 + | 13.65 + | 11.03 |
| | 20 | 26.61 | 23.70 + | 10.36 + | 7.38 + | 15.80 + | 13.80 + | 10.11 + | 10.77 + | 18.85 + | 8.64 + | 9.31 + | 13.31 |
| | 30 | 25.01 + | 22.18 + | 16.95 + | 9.86 + | 17.42 | 14.06 | 8.86 + | 11.22 - | 20.74 - | 11.24 | 10.58 + | 12.65 |
| | 40 | 24.16 | 17.81 + | 9.83 + | 8.10 + | 8.87 + | 13.19 + | 7.72 + | 9.48 + | 11.68 + | 9.76 + | 7.27 | 13.63 + |
| | 45 | 25.79 | 14.81 + | 7.41 | 8.09 + | 14.24 | 9.35 + | 4.07 | 7.65 + | 12.11 | 9.93 + | 5.30 | 12.57 + |
| | 50 | 13.71 + | 8.65 + | 6.14 | 9.31 + | 16.98 | 9.23 | 5.26 + | 7.00 | 17.30 | 11.08 + | 6.42 | 7.00 + |
| | 60 | 1.16 | 23.79 | 4.01 + | 3.96 + | 4.98 | 4.43 | 3.76 + | 3.79 | 5.96 | 5.08 | 4.65 + | 29.02 |
| 2.00 | 5 | 14.77 | 6.01 + | 6.06 + | 4.74 + | 7.43 + | 6.78 + | 6.55 + | 5.43 + | 8.83 + | 5.63 + | 5.89 + | 4.37 |
| | 10 | 16.70 | 6.53 + | 5.57 + | 4.44 + | 8.29 | 5.23 + | 6.36 + | 3.90 | 10.91 + | 4.83 + | 5.54 + | 5.20 |
| | 20 | 19.03 | 8.48 + | 5.07 + | 4.39 + | 9.06 + | 5.41 + | 3.85 + | 4.13 + | 8.78 + | 3.77 + | 3.46 - | 7.28 + |
| | 30 | 13.19 | 7.33 + | 4.29 + | 3.46 + | 7.47 + | 6.26 + | 3.88 | 4.75 + | 9.86 + | 4.19 + | 3.24 | 5.60 + |
| | 40 | 7.36 + | 5.23 + | 4.79 + | 4.70 + | 6.93 | 6.35 | 3.99 + | 5.27 + | 12.68 + | 4.69 + | 4.56 + | 3.35 + |
| | 45 | 12.01 | 6.36 + | 4.24 | 3.37 + | 4.28 + | 4.95 + | 3.90 + | 3.85 + | 5.75 + | 3.49 + | 3.93 + | 4.56 + |
| | 50 | 8.66 | 4.62 + | 3.53 | 4.50 + | 7.81 | 4.83 + | 2.59 + | 3.29 + | 7.22 | 4.94 + | 2.72 | 4.46 + |
| | 60 | 1.75 + | 19.52 | 1.62 | 4.16 + | 3.86 | 2.95 | 2.09 + | 2.26 | 5.03 | 3.86 + | 2.47 | 25.24 |

TABLE IV (cont'd)

EP 0 787 311 B1

In summary, by forming small cube corners and window faces in prism pairs with optical axes tilted away from each other by small amounts the effects of diffraction and retroreflection are combined to optimize the retroreflective pattern of light.

Utilizing very small air backed and metallized prisms for creating retroreflective articles with the above optimum retroreflective light distribution results in very thin and therefore highly durable retroreflective articles.

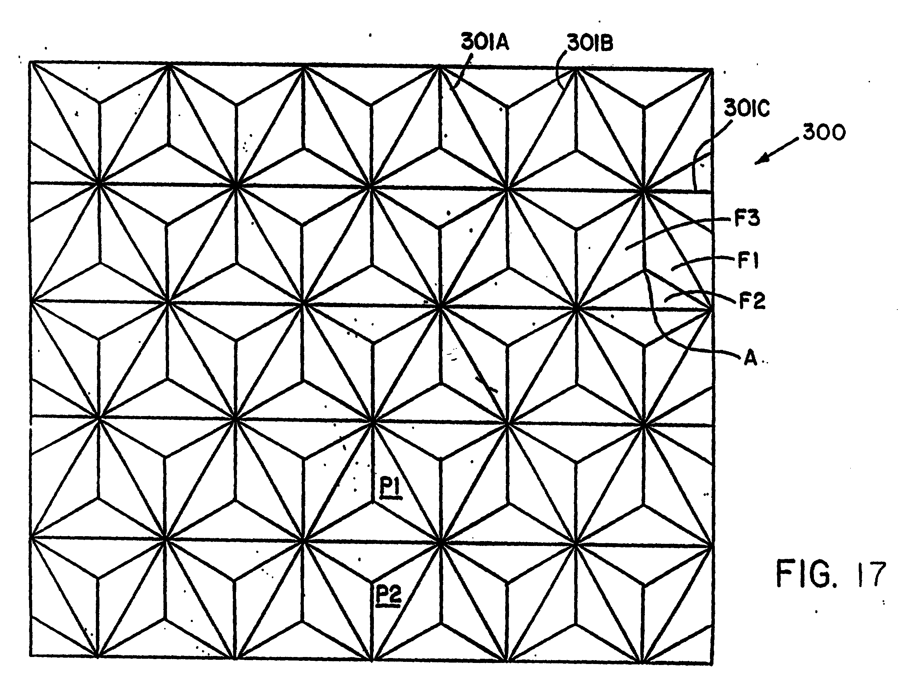

Yet another embodiment of the invention will now be described in connection with FIGS. 17-19.

FIG. 17 is a plan view of a portion of a prior art mold 300 for making retroreflective sheeting. The mold is formed by ruling or machining three sets of parallel grooves 301A,301B,301C which intersect to form prism pairs P1,P2. Each prism has a base and three side walls, or facets, F1,F2,F3 which meet at an apex A. For further details refer to the prior art patents above referenced.

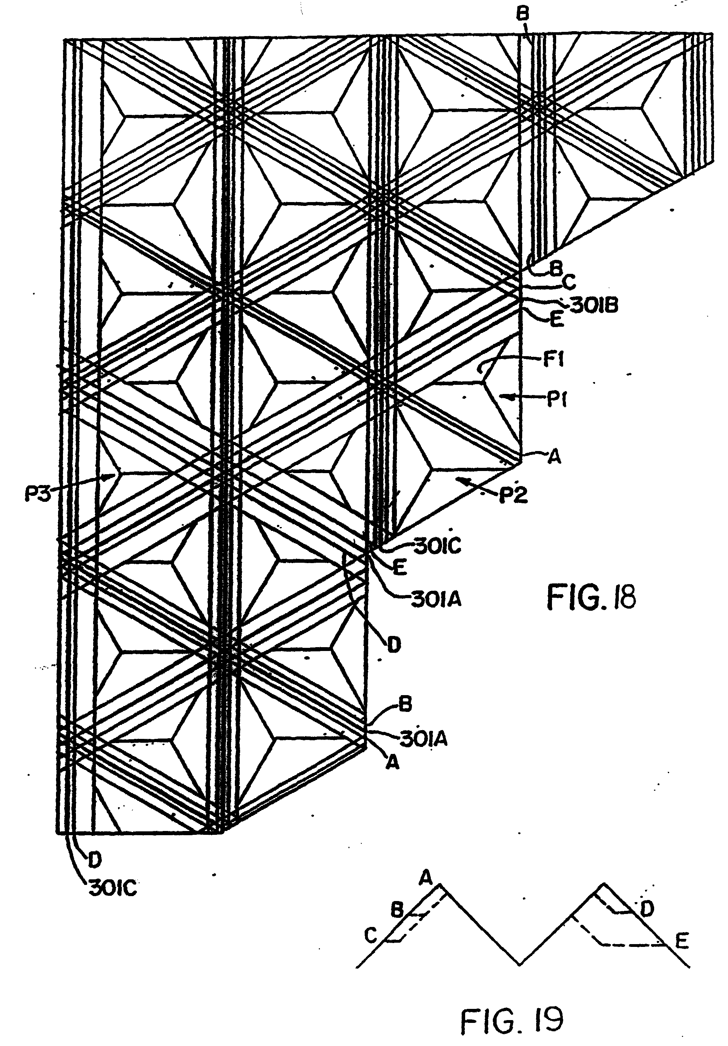

In accordance with the present invention, the mold of FIG. 17 is modified by a secondary ruling or machining operation as previously described in connection with FIGS. 1, 5 and 6, except that in this embodiment, portions of the prisms are removed at different levels A, B or C and/or in various thicknesses D or E, as shown in the schematic side view of FIG. 19 and the enlarged plan view of FIG. 18.

More particularly, there is shown in FIG. 18 prisms P1,P2 of various sizes depending upon the size of portions removed by the second pass of different groove depths A,B,C and/or widths D or E shown in dotted line in FIG. 19 and in solid in plan view of FIG. 18.

For example, in FIG. 18, the groove E is fairly wide, which leaves one side facet F1 much smaller than the other facets. On the other hand, the A and B grooves are not as wide, leaving the prism sides F1 and F2 of prisms P3 and P4 about the same size. Thus, depending upon the groove depth and width of the second pass, different size prisms can be created within the same area of the mold. Compare, for example, prism P1 formed by the intersection of an E, B and an A groove, and the smaller prism P3 formed by the intersection of two wide D grooves and a C groove.

Note that some of the prism faces can remain unmodified with just the original groove 301A, B or C formed in the first pass.

Equivalents

Those skilled in the art will recognize, or be able to ascertain using no more than routine experimentation, many equivalents to specific embodiments of the invention described specifically herein. Such equivalents are intended to be encompassed in the scope of the following claims.

For example, while the preferred direction of tilt is in a negative direction; positive tilt may also be beneficial for improvement in angularity. Also, while the prism faces are shown as planar, arcuate faces may be employed for specific applications.

**Claims**

1. Retroreflective sheeting (100) comprising: an array of reflective prisms (10) formed into pairs of prisms each prism comprised of a base and three intersecting lateral faces (11, 12, 13) which meet at an apex (14), characterised in that

   one of said prisms in some pairs is smaller in both height and width than the other.

2. The sheeting of Claim 1 wherein either :

   A) a window is formed on the smaller prism, and optionally, wherein the window extends from the base of the smaller prism to the base of the larger prism; or

   B) wherein the window is comprised of a surface extending from a face of the smaller prism toward an adjacent prism, and, optionally, wherein the surface is planar or arcuate; or

   C) the prisms are made of dielectric material and the prisms are tilted in a negative direction at an angle of tilt $\beta$ in the range of greater than zero to 10 degrees; or

   D) the smaller prisms have a width dimension in the range of about 0.64 mm (0.025 inches) to less than 0.013 mm (0.0005 inches); or

   E) the window extends from a plane above the base of the smaller prism; or

F) an optical axis of the prisms is defined by a trisector of an internal angle defined by the lateral faces; said prisms having a width dimension of about 0.13 mm (0.005 inches) and wherein the optical axis of prism pairs is tilted at an angle of between greater than zero and 10° in a negative direction with respect to one another and wherein a flat window is provided on a face of the smaller prism, and, optionally, wherein either:

(i) the window extends from a plane above the base of the prism; or

(ii) the smaller prisms have a width dimension in the range of about 0.64 mm (0.025 inches) to less than 0.013 mm (0.0005 inches); or

(iii) wherein the window extends from all faces of the smaller prism.

3. A method of forming retroreflective sheeting comprising the steps of:

a) forming a mold by:

(i) forming three parallel sets of grooves in a body of mold material; the grooves intersecting at an angle to form a plurality of prisms each prism having a base and three intersecting lateral faces which meet at an apex;
(ii) removing a portion of at least one face of a prism to form a smaller size prism adjacent a larger size prism;

b) forming said sheeting in said mold; and
c) removing the sheeting from the mold.

4. The method of Claim 3 wherein the prisms are formed in pairs and the optical axis of pairs of prisms are tilted in a negative direction.

5. The method of Claim 3 wherein the step of removing also forms a window extending from said face of said smaller prism.

6. The method of Claim 3 wherein the window is formed above the base of the prisms.

7. Retroreflective sheeting formed by the method of Claim 3.

8. The method of Claim 3 including the step of metallizing the sheeting on a prism face side, and optionally, wherein the prism faces are metallized.

9. The method of Claim 3 wherein the portion is removed by forming an additional groove adjacent at least one of said sets of grooves.

10. The method of Claim 9 wherein either :

A) the depth of the portion removed by the additional groove varies among the sets of grooves; or

B) the width of the portion removed by the additional groove varies among the sets of grooves; or

C) both the depth and width varies among the sets of grooves.

**Patentansprüche**

1. Retroreflektive Folie (100) aufweisend:

eine Anordnung reflektiver Prismen (10), ausgebildet in Prismenpaaren, wobei jedes Prisma aus einer Basis und drei sich schneidenden Seitenflächen (11, 12, 13) besteht, welche sich an einem Scheitelpunkt (14) treffen, dadurch gekennzeichnet, daß
eines der Prismen in einigen Paaren sowohl in der Höhe als auch in der Breite kleiner als das andere ist.

**2.** Folie nach Anspruch 1, wobei entweder:

A) ein Fenster auf dem kleineren Prisma ausgebildet ist, und wobei optional sich das Fenster von der Basis des kleineren Prismas sich zu der Basis des größeren Prisma hin erstreckt; oder

B) wobei das Fenster aus einer Oberfläche besteht, welche sich von einer Seite des kleineren Prismas zu einem benachbarten Prisma hin erstreckt, und wobei optional die Oberfläche eben oder gekrümmt ist; oder

C) die Prismen aus einem dielektrischen Material bestehen und die Prismen in einer negativen Richtung in einem Neigungswinkel β in dem Bereich von größer Null bis 10 Grad geneigt sind; oder

D) die kleineren Prismen eine Breitenabmessung in dem Bereich von etwa 0,64 mm (0,025 inches) bis etwa 0,013 mm (0,0005 inches) aufweisen; oder

E) das Fenster sich von einer Ebene über der Basis des kleineren Prismas aus erstreckt; oder

F) eine optische Achse der Prismen durch einen Drittel sektor eines von den Seitenflächen definierten Winkels definiert ist, wobei die Prismen eine Breitenabmessung von etwa 0,13 mm (0,005 inches) aufweisen, und wobei die optische Achse von Prismenpaaren in einem Winkel zwischen größer als Null und 10 Grad in einer negativen Richtung in Bezug zueinander geneigt ist und wobei ein flaches Fenster auf einer Fläche des kleineren Prismas vorgesehen ist, und wobei optional entweder:

(i) das Fenster sich von einer Ebene über der Basis des Prismas aus erstreckt; oder

(ii) die kleineren Prismen eine Breitenabmessung in dem Bereich von etwa 0,64 mm (0,025 inches) bis weniger als 0,013 mm (0,0005 inches) aufweisen; oder

(iii) wobei das Fenster sich von allen Seiten des kleineren Prismas aus erstreckt.

**3.** Verfahren zur Herstellung einer retroreflektiven Folie mit den Schritten:

a) Erzeugen einer Form durch:

(i) Erzeugen von drei parallelen Furchensätzen in einem Körper eines Formmaterials; wobei sich die Furchen in einem Winkel überschneiden, um mehrere Prismen zu erzeugen, wovon jedes Prisma eine Basis und drei sich schneidende Seitenflächen aufweist, welche sich an einem Scheitelpunkt treffen;

(ii) Entfernen eines Abschnitts zumindest einer Seite eines Prismas, um ein kleineres Prisma angrenzend an ein größeres Prisma zu erzeugen;

b) Erzeugen der Folie in der Form; und

c) Entnehmen der Folie aus der Form.

**4.** Verfahren nach Anspruch 3, wobei die Prismen in Paaren ausgebildet und die optischen Achsen der Prismenpaare in einer negativen Richtung geneigt sind.

**5.** Verfahren nach Anspruch 3, wobei der Schritt der Entnahme auch ein Fenster formt, das sich von der Seite des kleineren Prismas aus erstreckt.

**6.** Verfahren nach Anspruch 3, wobei das Fenster über der Basis der Prismen geformt wird.

**7.** Retroreflektive Folie hergestellt durch das Verfahren von Anspruch 3.

**8.** Verfahren nach Anspruch 3 einschließlich des Schrittes einer Metallisierung der Folie auf einer Prismenflächenseite, wobei optional die Prismenflächen metallisiert werden.

**9.** Verfahren nach Anspruch 3, wobei der Abschnitt entfernt wird, indem eine zusätzliche Furche benachbart zu mindestens einem der Furchensätze ausgebildet wird.

**10.** Verfahren nach Anspruch 9, wobei entweder:

A) die Tiefe des von der zusätzlichen Furche entfernten Abschnittes zwischen den Furchensätzen variiert; oder

B) die Breite des von der zusätzlichen Furche entfernten Abschnittes zwischen den Furchensätzen variiert; oder

C) sowohl die Tiefe als auch die Breite zwischen den Furchensätzen variiert.

**Revendications**

1.  Revêtement rétroréfléchissant (100) comprenant :

    un réseau de prismes réfléchissants (10) formé par paires de prismes, chaque prisme comprenant une base des trois faces latérales sécantes (11, 12, 13) qui se rencontrent au niveau d'un sommet (14), caractérisé en ce que l'un desdits prismes dans certaines paires est plus petit à la fois en hauteur et en largeur que l'autre.

2.  Revêtement selon la revendication 1, dans lequel soit :

    A) une fenêtre est formée dans le prisme plus petit, et, en option, la fenêtre s'étend depuis la base du prisme plus petit vers la base du prisme plus grand, soit
    B) la fenêtre comprend une surface s'étendant depuis une face du prisme plus petit vers un prisme adjacent, et, en option, la surface est éventuellement plane ou courbe, soit
    C) les prismes sont réalisés en un matériau diélectrique et les prismes sont inclinés dans une direction négative avec un angle d'inclinaison $\beta$ dans la plage allant de plus de 0° à 10°, soit
    D) les prismes plus petits ont une dimension de largeur dans la plage allant d'environ 0,64 mm (0,025 pouce) à moins de 0,013 mm (0,0005 pouce), soit
    E) la fenêtre s'étend depuis un plan situé au-dessus de la base du prisme plus petit, soit
    F) un axe optique des prismes est défini par un trisecteur d'un angle interne défini par les faces latérales, lesdits prismes ayant une dimension de largeur d'environ 0,13 mm (0,005 pouce) et dans lequel les axes optiques de paires de prisme sont inclinés avec un angle entre plus de 0° et 10° dans une direction négative l'un par rapport à l'autre et dans lequel une fenêtre plane est prévue sur une face du prisme plus petit, et, en option, soit :

    (i) la fenêtre s'étend depuis un plan situé au-dessus de la base du prisme, soit
    (ii) les prismes plus petits ont une dimension de largeur dans la plage allant d'environ 0,64 mm (0,025 pouce) à moins de 0,013 mm (0,0005 pouce), soit
    (iii) la fenêtre s'étend depuis toutes les faces du prisme plus petit.

3.  Procédé pour former un revêtement rétroréfléchissant, comprenant les étapes consistant à:

    a) former un moule en :

    (i) formant trois jeux parallèles de gorges dans un corps d'un matériau de moule, les gorges étant sécantes avec un angle pour former une pluralité de prismes, chaque prisme ayant une base et trois faces latérales sécantes qui se rejoignent au niveau d'un sommet,
    (ii) retirant une partie d'au moins une face d'un prisme pour former un prisme de dimensions plus petites adjacent à un prisme de dimensions plus grandes,

    b) former ledit revêtement dans ledit moule et,
    c) retirer le revêtement du moule.

4.  Procédé selon la revendication 3, dans lequel les prismes sont formés par paires et les axes optiques de paires de prismes sont inclinés dans une direction négative.

5.  Procédé selon la revendication 3, dans lequel l'étape consistant à retirer le revêtement forme également une fenêtre s'étendant depuis ladite face dudit prisme plus petit.

6.  Procédé selon la revendication 3, dans lequel la fenêtre est formée au-dessus de la base des prismes.

7.  Revêtement rétroréfléchissant formé par le procédé de la revendication 3.

8.  Procédé selon la revendication 3, comprenant l'étape consistant à métalliser le revêtement sur un côté de face de prisme, et, en option, dans lequel les faces de prisme sont métallisées.

9.  Procédé selon la revendication 3, dans lequel la partie est retirée en formant une gorge supplémentaire adjacente à au moins l'un desdits jeux de gorge.

**10.** Procédé selon la revendication 9, dans lequel soit:

A) la profondeur de la partie retirée par la gorge additionnelle varie parmi les jeux de gorge, soit :
B) la largeur de la partie retirée par la gorge additionnelle varie parmi les jeux de gorge, soit :
C) à la fois la profondeur et la largeur varient parmi les jeux de gorge.

FIG. 4

FIG. 2

FIG. 3

FIG. 1

EP 0 787 311 B1

FIG. 5

FIG. 6

FIG. 7

FIG. 8

FIG. 9

FIG. 10

OBSERVATION ANGLE = 0.33°

ENTRANCE ANGLE

FIG. IIA

EP 0 787 311 B1

OBSERVATION ANGLE=0.33°

FIG. 11B

EP 0 787 311 B1

FIG. IIC

FIG. 11D

FIG. 12A

OBSERVATION ANGLE=0.50°

ENTRANCE ANGLE

OBSERVATION ANGLE = 0.50°

ENTRANCE ANGLE

FIG. 12B

EP 0 787 311 B1

OBSERVATION ANGLE = 0.50°

ENTRANCE ANGLE

FIG. 12C

EP 0 787 311 B1

OBSERVATION ANGLE = 0.50°

ENTRANCE ANGLE

FIG. 12D

EP 0 787 311 B1

.168

.112 .124

61.9° 37.3° 28.10°

.051

.079 .147

57.7° 10B

.157 .112

.168

61.9°

FIG. 13

50

.168 10F

.081 .104

.157 .168

FIG. 14

FIG. 15

FIG. 16

FIG. 17

EP 0 787 311 B1

FIG. 18

FIG. 19